# EUROPEAN PATENT SPECIFICATION

(11) **EP 4 598 983 B1**
(45) Date of publication and mention of the grant of the patent: **19.08.2026**
(21) Application number: 23782919.7
(22) Date of filing: 29.09.2023
(51) Int. Cl.: C08J 5/18, B65D 65/46, C08L 5/04

(54) **ALGINATE-STARCH FILMS**
ALGINAT-STÄRKE-FILME
FILMS D'ALGINATE-AMIDON

(30) Priority: 03.10.2022 EP 22386067
(43) Date of publication of application: 13.08.2025
(73) Proprietor: Xampla Limited, Cambridge, Cambridgeshire CB4 0FW (GB)
(72) Inventor: BARROUX, Hugo Thomas, Cambridge Cambridgeshire CB4 0FW (GB); GKOTSIS, Georgios, Cambridge Cambridgeshire CB4 0FW (GB); RODRIGUEZ GARCIA, Marc, Cambridge Cambridgeshire CB4 0FW (GB); SOMERVILLE-ROBERTS, Nigel Patrick, Cambridge Cambridgeshire CB4 0FW (GB); AIKEN, James Alexander, Cambridge Cambridgeshire CB4 0FW (GB); BEALE, Christian, Cambridge Cambridgeshire CB4 0FW (GB); NICHOLLS, Stephen Arnold, Cambridge Cambridgeshire CB4 0FW (GB)
(74) Representative: Pott, Thomas
(86) International application number: PCT/EP2023/077130
(87) International publication number: WO 2024/074428

(56) References cited:
- EP-A1- 2 017 191
- EP-A1- 3 721 721
- WO-A2-2007/149276
- US-A1- 2019 248 989

## Description

### FIELD OF THE INVENTION

This invention relates to the field of heat-sealable, highly biodegradable films comprising polymers of fully natural plant origin, comprising salts of alginic acid and carbohydrates. The inventive films can be used for packing products, such as powder and liquid products, in sachets using current heat sealing equipment and at commercially viable production rates. In particular, the inventive films can be used in Vertical-Form-Fill-Seal (VFFS) packing equipment without requiring equipment modification. The inventive films use natural materials that are readily available, of low price and that have not required extensive or expensive chemical modifications. The films do not comprise synthetic polymers and are rapidly and completely biodegradable. The films can be soluble or non-soluble.

### BACKGROUND

Packaging materials made from renewable materials are of increasing interest and importance as environmental pressures dictate a move away from oil-based feedstock. Such packaging materials include films which are especially useful for wrapping and/or encapsulating products. Examples of products using films for packaging include sachets and bags. It is highly preferred if the packaging material, as well as being sourced from renewable materials, is highly biodegradable so as to minimise the problems of waste disposal. Typically, products made from renewable, natural feedstock, are highly biodegradable provided that they have not been chemically modified. Chemical modification can dramatically lower the biodegradability profile.

Some packaging films combine natural and synthetic materials. Such products typically have an improved environmental profile compared to equivalent products that use only synthetic materials. Plus, they can give an optimum balance of physical properties, such as strength and barrier resistance. However, the use of synthetic, typically non-biodegradable materials, inherently means that the biodegradability profile is not as good as materials that use fully natural raw materials.

Water-soluble films made from polyvinyl alcohol are widely available and widely used - for example in packaging of detergents. Often, they are marketed as being environmentally friendly. Examples include Monosol M-8630 from Monosol (now Kuraray). Typically, such films are soluble but actually have poor biodegradability in marine biodegradation tests and can accumulate in the environment.

Some products and packaging applications require the packaging material itself to be edible. In this context, by "edible" it is meant that all of the materials are classified as being safe to eat whether or not they are digestible by humans or can provide human nutrition.

Many biopolymers, or materials of natural origin, can be used to make packaging films. Widely used examples of biopolymer films include starches and cellulose-based films. Starches are especially widely used due to their low cost and ready availability. Typically, the starches are chemically modified to improve their processability and functionality. One example of a modified starch is hydroxypropylated amylose starch. Other substituents may be hydroxyethyl or hydroxybutyl to form hydroxyether substitutions, or anhydrides such as maleic phthalic or octenyl succinic anhydride can be used to produce starch ester derivatives. Starch films typically have high tensile strengths at moderate humidity (such as between 30% and 50% at 20 °C) but typically become much weaker at higher humidity unless they have been highly chemically modified. In particular, many starch films are very susceptible during storage at low temperatures, as starches are prone to retrogradation.

Many starch-based products, such as compostable bags, include significant levels of polybutene adipate terephthalate or PBAT to improve their processability and physical properties. PBAT is a biodegradable synthetic polymer. However, it is obviously obtained from non-renewable feedstock. Examples of starch-based films are those sold by Plantic Technologies Ltd (now part of Kuraray). Plantic films comprise modified starch and are available as both monolayer and multi-layer films.

Cellulose-based polymers and materials can also form films and are also widely used. Commonly, cellulose films are made from so-called "regenerated" cellulose wherein cellulose fibers are dissolved in carbon disulphide under alkaline conditions to form viscose. The viscose is then contacted with an acidic solution to "regenerate" the cellulose. Such processes are resource and energy intensive, and the resulting cellulose films are not water-soluble or water-dispersible at all, and they do not heat seal. Regenerated cellulose is used in NatureFlex films, which are cellulose-based compostable packaging films sold by Futamura. Other cellulose-materials include Hyproxypropyl Methyl Cellulose (HPMC) and Carboxymethyl Cellulose (CMC). HPMC films have long been used in the medical field as a coating for tablets. However, HPMC itself requires significant effort to synthesise and thus is relatively expensive. It is not fully biodegradable due to the level of synthetic modification.

Other biopolymers that can be used to make films include proteins, both animal and plant sourced. Examples of animal proteins that can be used to form films include gelatine, collagen and casein. Gelatine is very widely used as a material for tablets and capsules. Casein (a milk protein collected from whey) has long been used to make plastic materials and can be formed into soluble and thermoformable pellets or sheets. Such materials do have very good biodegradability profiles but are animal sourced. As such, some people have moral and ethical issues with use of such products. In addition, in terms of efficient resource usage, it is typically environmentally better to be able to use a plant material directly rather than indirectly by feeding the plants to animals.

The use of biopolymers to make films and coatings is increasingly widespread and much effort continues to be put into using naturally sourced, renewable materials as replacements for non-renewable feedstock such as petroleum. The art is large and widespread and examples given below are for illustrative purposes.

Many biopolymers are being used including plant-based and animal-based materials. Examples of animal-based materials used to make films and coating include collagen, gelatine, chitosan, shellac and casein. Examples of plant-based materials used include starch, celluloses, proteins including pea, soy, corn and potato, alginates, carrageenan and other gums, pullulan, pectin and so on. The reasons for using biopolymers in these applications range from wanting to use renewable feedstock to having more biodegradable materials to using more biocompatible materials for medical applications and even to provide edible packaging. Films and other packaging materials made from biopolymers can be soluble or insoluble. There is a need to use plant-derived biopolymers rather than animal-derived biopolymers, both for ethical reasons and resource efficiency. Alginates are attractive biopolymers as they are commonly sourced from seaweeds and can be made into robust films. However, alginate films do not heat seal easily.

Biopolymers are complex materials and often harder to process and handle than synthetic polymers. Typically, they are susceptible to moisture and lose strength in high humidity environments. This susceptibility of biopolymers to moisture is typically an inherent feature due to their natural sources and is the major limitation to their more widespread use. Other issues include poorer thermoplastic properties including heat sealing of biopolymer films. Rapid and effective heat sealing without thermal damage is critical for industrial production of sachets and many package forms. The issues associated with many biopolymers, and especially their poor water resistance means that they are often either chemically modified to improve their properties, blended with synthetic polymers or laminated with other materials, including other biopolymers, so as to get a film having improved properties.

Polyhydroxyalkanoates are increasingly used due to their good thermoplastic properties. PHAs are natural biopolymers sourced from microbial fermentation but are slow to biodegrade and insoluble.

An example of an animal-based biopolymer is casein. EP3728477A1 describes a thermoplastic casein composition and packaging films made from thermoplastic casein. US9662400B2 describes chitosan films useful for medical applications. US6448378B2 describes soluble collagen films which are used to deliver drug treatments. A large-scale application for many edible films including collagen, alginate and protein-based films (amongst others) is for sausage casings. Sausage casings do not need to be heat sealed. US3408916 describes collagen films used for sausage casings. US6730340B1 describes a plant-based biopolymer blend for sausage casings based on mixtures of carrageenan and gellan gum.

US10092925B2 and JP6010068B2 describe production process for making alginate films. No mention is made of heat sealing. JPH0530891A describes use of a blend of alginate and other polysaccharides, principally pullulan. It states that pure alginate films do not heat seal. Blending high levels of pullulan with alginate results in a film that can be sealed and is non-soluble. Pullulan is expensive for large-scale use as the majority component of a film.

Chemically modifying natural polymers or blending natural and synthetic polymers can improve the physical and processing properties of films made from these materials but will often reduce the overall biodegradability, is complex and does require the use of non-renewable materials.

Starch is cheap and can be chemically modified to improve its properties. US5498662 describes gas barrier films comprising a blend of poly(meth)acrylic acid and starch. Thermoplastic starches are available under the MATER-BI trade name supplied by Novamont. US20040242732A1, EP2496644B1 and WO2011080623A2 describe a biodegradable polymer composition based on chemically modified starch plus synthetic polymers. These materials can be used to form films.

Cellulose derivatives, and especially cellulose ethers such as Hydroxypropyl Methyl Cellulose, are used to make films, commonly for medical applications. EP1045000B1 describes an ingestible HPMC film. Such materials, whilst often safe to ingest, require high levels of synthetic modification. HPMC is often used for drug coatings due to its selective pH solubility.

The use of laminated films to overcome some of the limitations of a single biopolymer is known. These laminates can comprise two or more layers. One of the layers can be a synthetic polymer. The synthetic polymer can be partially or fully biodegradable. The use of a synthetic polymer is not preferable compared to the use of biopolymers due to the use of non-renewable materials but the use of a combination of natural and synthetic materials can still be preferable compared to a fully synthetic material. The synthetic polymer layer, or highly modified biopolymer layer, typically provides enhanced barrier properties or enhanced heat sealing properties. The layers can preferably be different biopolymers.

A common type of biopolymer-based laminate is a modified starch laminated with a synthetic polymer. An example of this is EP1581388B1which describes a co-extrusion process to make a modified starch film laminated with a biodegradable polyester. US8715816 describes a multilayer film comprising a thermoplastic starch layer and a thermoplastic polyester layer. Other examples of composite laminated films are where the synthetic polymer is used to provide a heat-sealing layer.

EP2013290B1 describes a silk protein laminate film where the silk protein is laminated with another layer which could be either a different protein, such as collagen, or a synthetic polymer. There is no mention of heat sealing and the use of an animal product is non-preferred.

JP2009061108A discloses an edible laminate film comprising alginate and starch layers (amongst multiple others) which can be used to form a package. The starch layers can be sealed together. No details are given about film or material specifics nor any details relating to production of articles comprising the laminate film.

JP2016034841A discloses an edible laminated film comprising one layer of shellac and another layer of either starch, gelatine or pullulan. Packets can be made of the laminate film with the shellac layer on the inside. Shellac is an animal product and no production details are given.

JP2010136685A describes a laminated film comprising a cationic biopolymer, typically chitosan, and an anionic biopolymer, typically gelatine. One biopolymer is cast and then the second biopolymer cast on it. The resulting film is insoluble. The film can be heat sealed but not details are given and the use of animal products in undesirable.

US5089307A describes an edible, heat-sealable laminated film. The films comprise a layer of carrageenan and a sealing layer selected from casein, soy protein or gelatine. Alginates are not disclosed.

JP4063481B2 describes a multi-layer packaging film wherein one layer comprises regenerated cellulose. Other layers comprise acrylic and other synthetic resins.

EP3721721A1 describes an edible, multilayer film comprising three layers of different "hydrocolloid substances" wherein the first layer can be alginate, the second layer can comprise starch and the third layer agar. The films can be heat sealed but no production details are given.

WO2007/149276A2 describes an edible article comprising a food product and a film that encloses the food product. In one embodiment, the film comprises a major amount of pullulan on a dry solids basis, and a minor amount of at least two of glycerol, propylene glycol, sorbitol, and polyethylene glycol. In another embodiment, the film comprises a major amount of pullulan on a dry solids basis, gelatin, and at least two of glycerol, propylene glycol, sorbitol, and polyethylene glycol, and can also comprise salt. In another embodiment, the film comprises a first layer comprising a major amount of at least one food grade wax, a second layer comprising a major amount of pullulan and further comprising at least one plasticizer, and a third layer comprising at least one surfactant that is substantially immiscible with aqueous pullulan compositions but which adheres to pullulan surfaces, wherein the at least one surfactant is at least partially crystalline. In another embodiment, the film comprises a major amount of pullulan on a dry solids basis, at least one salt (and in some cases at least two salts), and at least one plasticizer. In another embodiment, the film comprises an edible film adhered to a peelable, flexible substrate, wherein the edible film comprises a major amount of pullulan on a dry solids basis and at least one plasticizer. The edible article can be manufactured by preparing a film-forming composition as described above, forming the film-forming composition into a film, and enclosing a food product with the film.

US2019/248989A1 describes films and packaging materials including biodegradable and edible components and pods created using these materials are described therein.

EP2017191A1 aims to provide a novel taking or having-or-swallowing form for an oral material, such as drugs or foodstuffs. EP2017191A1 provides an edible film packaging containing an edible film material which has adhesion properties and is softened upon contact with moisture. The edible film packaging is taken or had-or-swallowed while an oral material being encapsulated. Moreover, this invention provides an oral-material taking method, including taking or having-or-swallowing the edible film packaging in which the oral material has been encapsulated as it is without opening or as it is without opening after being immersed in water for a given period of time.

Accordingly, there exists a need to develop alginate-based films with tuneable solubility that have sufficiently robust mechanical properties for them to be used as packaging films, including being handled in a manufacturing process and able to survive transportation and storage at low temperatures. A preferred feature is for foodstuff packaging to be edible, so as to further minimise waste and increase consumer convenience.

### SUMMARY OF THE INVENTION

Viewed from a first aspect, the present invention provides a film comprising:
a first layer comprising based on the total weight of the first layer:
   at least 20 wt.-% of one or more monovalent salts of alginic acid, and
   at least 5 wt.-% of one or more organic plasticisers;
a second layer comprising based on the total weight of the second layer:
   one or more carbohydrates other than alginic acid and any of its salts,
   at least 5 wt.-% of one or more organic plasticisers, and
   less than 20 wt.-% of alginic acid salts;
wherein one surface of the second layer is sealed to one surface of the first layer.

Preferably, the film of the first aspect of the present invention has a thickness of between 20 µm and 120 µm.

Preferably, in the film of the first aspect of the present invention the first layer further comprises one or more divalent alginic acid salts selected from calcium alginate and magnesium alginate.

Preferably, in the film of the first aspect of the present invention the second layer has an onset melting temperature in the range of from 55 °C to 85°C, determined as by the method described in Example 3 of the specification.

Preferably, in the film of the first aspect of the present invention the second layer comprises a starch and/or pullulan.

Preferably, the film of the first aspect of the present invention comprises based upon the total weight of the film 3-90 wt.-%, preferably 15-85 wt.-%, more preferably 25-80 wt.-%, most preferably 35-70 wt.-%, of one or more alginic acid salts, determined as according to the HPLC method in Journal of Chromatographic Science 2013; 51: 208-214.

Preferably, the film of the first aspect of the present invention has a heat sealing strength of at least 40 N/m, preferably at least 60 N/m, more preferably at least 80 N/m, even more preferably at least 100 N/m, most preferably at least 120 N/m, as measured by ASTM F88/F88M-15 at 55% relative humidity and 20 °C after the film has been conditioned at 55 % relative humidity and at 20 °C for at least one hour and then sealed at a temperature of 120 °C and a pressure of 3 bar applied for a time of 1 second.

Viewed from a second aspect, the present invention provides a process for preparing a film as hereinbefore described, comprising the steps of:
(i) providing a first layer comprising based on the total weight of the first layer:
   at least 20 wt.-% of one or more monovalent salts of alginic acid, and
   at least 5 wt.-% of one or more organic plasticisers;
(ii) providing a second layer comprising based on the total weight of the second layer:
   one or more carbohydrates other than alginic acid and any of its salts,
   at least 5 wt.-% of one or more organic plasticisers, and
   less than 20 wt.-% of alginic acid salts; and
(iii) sealing one surface of the second layer to one surface of the first layer.

Viewed from a third aspect, the present invention provides a product enclosed by a film as hereinbefore described.

Preferably, in the product of the third aspect of the present invention the film is more than 75 %, preferably more than 80 %, more preferably more than 85 %, even more preferably more than 90 %, most preferably more than 95 % biodegradable, according to ASTM D6691.

Viewed from a fourth aspect, the present invention provides a method of enclosing a product, comprising the steps of:
(i) wrapping the product in a film as claimed in any one of claims 1 to 7, such that the first layer is the outer layer; and
(ii) heat sealing the film around the product to form a sachet.

Preferably, in the method of the fourth aspect of the present invention the duration of step (ii) is less than 2 seconds, more preferably less than 1 second, more preferably less than 0.5 seconds, and wherein step (ii) is conducted at a temperature of less than 160 °C, preferably less than 140 °C, preferably less than 120 °C.

Viewed from a fifth aspect, the present invention provides the use of as hereinbefore described to enclose a product and/or to prepare a sachet.

Viewed from a sixth aspect, the present invention provides a sachet prepared by the method as hereinbefore described.

Viewed from a seventh aspect, the present invention provides a method of releasing a product enclosed in a film as hereinbefore described, comprising the steps of:
(i) placing the enclosed product in water; and
(ii) allowing the film to disperse, thereby releasing the product.

### DETAILED DESCRIPTION OF THE INVENTION

It is preferable if non-traditional sources of biopolymers can be used whenever possible when sourcing feedstock for the inventive packaging films. Such non-traditional feedstock can be combined with traditional feedstock. "Traditional" relates to biopolymers typically used as human feedstuffs, for example starches. Particularly preferred biopolymers for the inventive films are polymers and salts based on alginic acid. Alginates are typically sourced from seaweeds, which do not directly compete with food crops and do not require valuable farmland.

Alginic acid is a polysaccharide typically obtained from the cell walls of brown seaweed. Alginic acid is a bio-copolymer of β-D-mannuronic and α-L-guluronic acids which are available in a range of molecular weights and ratios of monomers depending on the source. This results in alginic acid solutions with a range of viscosities. Alginates are widely used in many applications including making films. The films can be water-soluble or water insoluble depending on whether the alginate has been cross-linked or not cross-linked, typically by a divalent metal ion. Films based on sodium alginate are typically water-soluble whereas films comprising calcium alginate are mostly water insoluble.

The suitability of the inventive films for commercial use does not just depend on their positive environmental profile. The films have to be processable. They have to be robust throughout the multiple environments experienced, including manufacture, storage and final use. They have to meet multiple different requirements, such as permeability, elongation and tensile strength. They must also be heat-sealable.

The inventors have discovered that many films with high (> 20%) alginate content are often difficult to heat-seal. This lack of heat sealability is a significant limitation to the more widespread use of alginate-based films due to the large extant manufacturing base that uses heat sealing packing lines and many types of different packaging equipment that use heat sealing.

In heat sealing, two films are pressed together and subjected to heat for a specified amount of time. The application of heat causes the diffusion and migration of polymer chains at the interface from film to film causing the formation of a bond as the seal is cooled. Not all polymer materials will heat seal as the mechanism depends on the behaviour of polymer chains at the interface. If these chains do not easily move or migrate, then the films will not seal. The ease of heat sealing is a complex interaction of polymer type, level of crystallinity, plasticisation, temperature and time.

Without wishing to be bound by theory, the poor heat-sealing behaviour of typical alginate films is believed to result from the more compact structures that alginate materials seem to form when subjected to heat. This effect has been reported in the art and is used in some alginate film making processes where heat treatments are used to make denser and less-permeable films. Production of alginate films very often involves the application of heat to remove water. Heat sealing by definition requires heat to be applied. Thus, alginates would seem to be inherently poorly suited to heat sealing applications. Heat sealing alginate films may be possible if high levels of selected other materials are added to the film composition but this then negates much of the benefit of using alginates in the first place.

One established route for sealing alginate films is to use an adhesive to glue the films together. This can be combined with the application of heat and pressure to ensure good sealing. Such an approach is viable for certain types of equipment, such as the Hydroforma pouch maker from Cloud Packaging Inc. (now part of Mespack), as the design of the drum allows the application of an adhesive layer on to one or both films. Nonetheless, adhesives come with their own draw backs such as the risk of contamination of the enclosed material or contamination of the adhesive by the enclosed product, particularly when a liquid or powder reduces seal robustness. Many packing companies, however, use Vertical Form-Fill Seal (VFFS) technology to make sachets.

In the VFFS process, film is drawn through the packing equipment and folded together and sealed to form the sachet. Typically, a strip of film is folded around the filling head and sealed to form a cylinder or tube which is then sealed at the base, filled with the contents through the filling head and the top is then sealed. This approach can be used for both powders and liquids. The need to "pull" film through the equipment means that the film needs to have a minimum strength. The film cannot stretch too much otherwise it becomes very hard to control the correct positioning and alignment of the film. The film cannot be sticky to the touch as otherwise the friction on the film as the film is pulled through the equipment is too high. This means that spraying or applying a coating to one surface as the film strip is pulled through the packing line is just not practical.

The films are also suitable for use in Horizontal-Form-Fill-Seal packaging equipment. In typical HFFS machines, as in the Hydroforma pouch maker, a sheet of film is drawn down into a mold by the application of vacuum to form a cavity, material is placed in the cavity and a second sheet of film is used to seal the cavity. The sealing can be by heat sealing or by solvent/adhesive sealing or combinations thereof.

Typically, inventive films are suitable for producing a variety of packaging forms including flexible pouches, blister packs, pods, sachets, flowraps, envelopes, sticks, and doypacks.

The inventors have discovered that a multi-layer film comprising an alginate-rich layer and a carbohydrate-rich layer can overcome the various challenges highlighted above, based on selection of the materials and thicknesses of the layers. Such inventive films have good physical properties, such as strength, over a wide range of conditions. They can be made from plant-based materials, do not require chemical modification and are of low cost and readily available. They can have a controlled solubility and have a very high biodegradability. Careful selection of material properties and the thicknesses of the layers means they can be heat sealed under industrially relevant conditions without damaging the sachets. The inventive films typically need to be sealed together by the carbohydrate-rich layers to get a good seal, whether a heat-seal or a solvent-seal (when used in HFFS equipment). Trying to seal alginate layers together or a carbohydrate layer to an alginate layer will not provide a robust seal.

Any film needs to be heat-sealable within a short period of time for any production to be industrially viable. The design of a VFFS packing line mean means that the production rate is directly related to the time taken to perform the heat sealing. If it takes 5 seconds to perform the heat-sealing operation, then an individual line can only make 12 sachets a minute. This rate is far too low to be economically viable. Sealing times need to be less than 1 second, and preferably less than 0.5 seconds, for any production process to be economically viable for most products. Hence, the practical definition of heat sealability needs to include that, as well as being able to form robust seals, this needs to be achievable in less than 1 second and preferably less than 0.5 seconds.

Heat sealing depends on the temperature at the interface of the two films being sealed to be high enough to start to melt the material at the interface so it starts to migrate and inter-penetrate. The temperature at the interface of the two films depends on the following variables.
(i) The temperature of the sealing plate(s) applying the heat. The higher the temperature, the quicker the interface will be heated.
(ii) The time that the heating plate is in contact with the film. Longer times allow more time for heat to be conducted through the film layers to the interface.
(iii) The thickness of the film that the heat is being conducted through. The thicker the film, the longer it will take for the interface at the middle to reach a sufficient temperature.
(iv) The thermal conductivity of the layers forming the film. The rate at which heat is transferred across each layer in the film depends on the thermal conductivity of the film. The higher the thermal conductivity, the quicker heat is transferred to the interface.

As stated above, the time that the heating plate is in contact with the film for, needs to be as short as possible. One way to minimise the time required for the interface temperature to rise sufficiently to cause sealing is to use a high sealing temperature. This is effective but if the temperature is too high (such as > 160 °C), it will thermally damage the alginate layer of the film that is in contact with the sealing plate, leading to visual and other defects around the seal.

Thus, the thermal stability of the alginate-rich layer and the limited time available for heat sealing is crucial. According to the present invention, selection of a carbohydrate layer composition that has a thermal onset temperature of less than 85 °C, combined with a total thickness of between 20 µm and 120 µm of the two layers together forming the film, is preferred. The thermal onset temperature is the temperature at which a composition begins to soften and partially melt. For heat sealing to occur, the materials at the interface must be at or above the thermal onset temperature. Controlling the thicknesses of the films allows sufficient heat to be transferred to the interface in the time available whilst giving films of sufficient thickness and robustness to be practical.

Thus, a film comprising two layers - one alginate-rich and the other carbohydrate-rich - wherein the thicknesses of the two layers are controlled within specified limits and wherein the carbohydrate-rich layer has an onset temperature of less than 85 °C - gives a preferred plant biopolymer-based film that is robust and processable with current heat sealing equipment.

Accordingly, the present invention provides a film comprising:
a first layer comprising based on the total weight of the first layer:
   at least 20 wt.-% of one or more monovalent salts of alginic acid, and
   at least 5 wt.-% of one or more organic plasticisers;
a second layer comprising based on the total weight of the second layer:
   one or more carbohydrates other than alginic acid and any of its salts,
   at least 5 wt.-% of one or more organic plasticisers, and
   less than 20 wt.-% of alginic acid salts;
wherein one surface of the second layer is sealed to one surface of the first layer.

In films of the present invention, the first layer comprises at least one monovalent alginic acid salt. In preferred films of the present invention, the first layer comprises at least one alkali metal salt of alginic acid. More preferred, the first layer comprises lithium alginate, sodium alginate, potassium alginate, ammonium alginate or mixtures thereof, with sodium alginate being most preferred.

In alternative preferred films of the present invention, the first layer further comprises one or more divalent alginic acid salts selected from calcium alginate and magnesium alginate, with calcium alginate being most preferred.

In preferred films of the present invention, the first layer has a thickness between 15 µm and 115 µm. In alternative preferred films of the present invention, the second layer has a thickness between 5 µm and 80 µm. Preferred films of the present invention have a thickness between 20 µm and 120 µm.

In preferred films of the present invention, the second layer has an onset melting temperature of less than 85 °C, preferably less than 80 °C, determined as described in Example 3 of the specification.

In alternative preferred films of the present invention, the second layer has an onset melting temperature of at least 55 °C, determined as described in Example 3 of the specification.

Most preferred, the second layer has an onset melting temperature in the range of 55 to 85 °C, determined as described in Example 3 of the specification.

In preferred films of the present invention, the one or more carbohydrates other than alginic acid and any of its salts in the second layer are selected from monosaccharides, disaccharides, oligosaccharides, polysaccharides, and mixtures thereof. More preferably, the second layer comprises at least one carbohydrate which is a polysaccharide. Most preferred, said polysaccharide is a starch.

A starch is a carbohydrate polymer. Starches consist essentially of amylose and/or amylopectin and in the native form are typically in the form of semi-crystalline granules. Sources of starch include but are not limited to fruits, seeds, and rhizomes or tubers of plants.

Some starches are classified as waxy starches. A waxy starch consists essentially of amylopectin and lacks an appreciable amount of amylose. Typical waxy starches include waxy maize starch, waxy rice starch, waxy potato starch, and waxy wheat starch.

Alternatively, some starches are classified as high amylose starches.

Modified starches are prepared by physically, enzymatically, or chemically treating native starch to change its properties. Starches may be modified, for example, by enzymes, by heat treatment, oxidation, or reaction with various chemicals.

In the films of the present invention, the starch may be a native starch or a modified starch, or a mixture thereof.

In preferred films of the present invention, the starch is selected from wheat starch, potato starch, pea starch, waxy potato starch, maize starch, waxy maize starch, high amylose maize starch, tapioca starch, cassava starch, rye starch, sorghum starch, chickpea starch, soy starch, or a mixture thereof, preferably potato starch.

In alternative preferred films of the present invention, the starch is a modified starch selected from acid-treated starch, dextrin, alkaline-modified starch, bleached starch, oxidized starch, enzyme-treated starch, maltodextrin, cyclodextrin monostarch phosphate, distarch phosphate, acetylated starch, hydroxypropylated starch, hydroxyethyl starch, starch sodium octenyl succinate, starch aluminium octenyl succinate or cationic starch, or a mixture thereof, preferably acid-treated starch.

Alternatively, said polysaccharide is pullulan.

In preferred films of the present invention, the second layer comprises a starch and/or pullulan.
In preferred films of the present invention, the second layer comprises 40-95 wt% carbohydrate based upon the total weight of the second layer, preferably 50-80 wt%, more preferably 55-75 wt%.

Alternative preferred films of the present invention comprise 1-80 wt% of one or more carbohydrates based upon the total weight of the film, preferably 7-70 wt%, more preferably 15-50 wt%.

Preferred films of the present invention comprise 3-90 wt% of one or more monovalent salts of alginic acid based upon the total weight of the film, preferably 15-85 wt%, more preferably 25-80 wt%, most preferably 35-70 wt.-% determined according to the HPLC method in Journal of Chromatographic Science 2013; 51: 208-214.

Preferred films of the present invention comprise 10-50 wt% of one or more organic plasticisers based upon the total weight of the film, preferably 15-45 wt%, more preferably 20-40 wt%.

Preferably, the one or more organic plasticisers in the first layer are independently selected from the group consisting of:
a) polyols formed by from 1 to 20 repeating hydroxylated units each unit including from 2 to 6 carbon atoms, provided that when the polyol is formed by only one repeating unit it has at least 4 carbon atoms, with the exclusion of sorbitol,
b) ethers, thioethers, inorganic and organic esters, acetals and amino-derivatives of polyols formed by from 1 to 20 repeating hydroxylated units each including from 2 to 6 carbon atoms with the exclusion of acetic esters of glycerine, triethyl citrate and tributyl citrate,
c) polyol reaction products having from 1 to 20 repeating hydroxylated units each including from 2 to 6 carbon atoms with chain extenders,
d) polyol oxidation products having from 1 to 20 repeating hydroxylated units each including from 2 to 6 carbon atoms including at least one aldehydic or carboxylic functional group or mixtures thereof.

More preferably, the one or more organic plasticisers in the first layer are independently selected from glycerol, polyethylene glycol, propylene glycol, sorbitol, mannitol, xylitol, triethyl citrate, fatty acids (e.g. oleic acid), glucose, mannose, fructose, sucrose, urea, lecithin, waxes, amino acids and organic acids (e.g. lactic acid, citric acid, glycolic acid, malic acid, or tartaric acid), or a mixture thereof, with a mixture of glycerol, sorbitol and oleic acid being most preferred. Preferably, the plasticiser is plant-derived.

In preferred films of the present invention, the one or more organic plasticisers are present in the first layer in an amount of 10-50 wt%, more preferably 20 to 40 wt%, based upon the total weight of the first layer at 55% relative humidity and 20 °C.

In alternative preferred films of the present invention, the weight ratio of alginic acid salt to organic plasticiser in the first layer is in the range 4:1 to 1:1.

Preferably, the one or more organic plasticisers in the second layer are independently selected from the group consisting of:
a) polyols formed by from 1 to 20 repeating hydroxylated units each unit including from 2 to 6 carbon atoms, provided that when the polyol is formed by only one repeating unit it has at least 4 carbon atoms, with the exclusion of sorbitol,
b) ethers, thioethers, inorganic and organic esters, acetals and amino-derivatives of polyols formed by from 1 to 20 repeating hydroxylated units each including from 2 to 6 carbon atoms with the exclusion of acetic esters of glycerine, triethyl citrate and tributyl citrate,
c) polyol reaction products having from 1 to 20 repeating hydroxylated units each including from 2 to 6 carbon atoms with chain extenders,
d) polyol oxidation products having from 1 to 20 repeating hydroxylated units each including from 2 to 6 carbon atoms including at least one aldehydic or carboxylic functional group or mixtures thereof.

More preferred, the one or more organic plasticisers in the second layer are independently selected from glycerol, diglycerol, triethylene glycol, polyethylene glycols such as PEG400 and other polyethylene glycols, propylene glycol, dipropylene glycol, polypropylene glycols, sorbitol, mannitol, xylitol, compounds produced by adding ethylene oxide to glycerin, pentaerythritol, sorbitol, and other polyalcohols, triethyl citrate, fatty acids (e.g. oleic acid), glucose, mannose, fructose, sucrose, urea, lecithin, waxes, amino acids and organic acids (e.g. lactic acid, citric acid, glycolic acid, malic acid, or tartaric acid), sugar surfactants, or a mixture thereof, with a mixture of glycerol and sorbitol being most preferred. Preferably, the plasticiser is plant-derived.

The term sugar surfactant means that the surfactant includes at least one sugar moiety. Sugar surfactants are preferably composed of at least one, preferably more than two monosaccharide units linked glycosidically and may include what are terms 'sugar moieties (2 monosaccharide units) or from 3 monosaccharides.

The monosaccharides of the sugar moiety maybe of the same type (homopolysaccharide) or different (heterosaccharide).

Preferably the sugar surfactant is ionic, more preferably it is anionic, cationic, or amphoteric. More preferably it is anionic. The sugar surfactant is preferably selected from functionalised alkyl polyglycosides, fatty acid glucamides, glycinates, glycolipid biosurfactants such as rhamno-based surfactants (e.g. rhamnolipids) or sophorolipids; or any combination thereof.

In preferred films of the present invention, the one or more organic plasticisers are present in the second layer in an amount of 10-50 wt%, more preferably 20 to 40wt% based upon the total weight of the second layer at 55% relative humidity and 20 °C.

In preferred films of the present invention, the weight ratio of the one or more carbohydrates to the one or more organic plasticisers in the second layer is in the range 4:1 to 1:1.

As would be understood by a skilled person, the one or more organic plasticisers can either be the same in the first and second layer, or the one or more organic plasticisers in the first and second layer can be different.

When the film is intended to package a foodstuff, the plasticiser must be suitable for human consumption.

Preferred films of the present invention comprise 7.5 - 35 wt.-%, more preferably 10-30 wt.-%, most preferably 15-25 wt.-%, water based upon the total weight of the film at 55% relative humidity and 20 °C.

In preferred films of the present invention, the first layer further comprises at least one carbohydrate, more preferably a polysaccharide, most preferably a starch.

In alternative preferred films of the present invention, the second layer further comprises a divalent metal salt. Preferably, said divalent metal salt is an alkali earth metal salt or a transition metal salt, more preferably said alkali earth metal salt is a magnesium salt or a calcium salt, with a calcium salt being most preferred.

A preferred transition metal salt is a zinc salt.

Preferably, said calcium salt is selected from calcium chloride, calcium acetate, calcium citrate, calcium gluconate, with calcium chloride being most preferred.

In preferred films of the present invention, the divalent metal salt is present in the second layer in an amount of 0.1-5 wt.-%, more preferably 0.2-4 wt.-%, most preferably 0.5-3 wt.-%, based upon the total weight of the second layer at 55% relative humidity and 20 °C.

Preferred films of the present invention further comprise one or more additives, such as gums, oils, fragrances, dyes, pigments, opacifiers, antimicrobial agents such as, thymol, anti-blocking agents, or structural enhancers such as cellulose nanofibers, cellulose nanocrystals and cellulose fibres.

Preferred films of the present invention further comprises a phyllosilicate. Preferably, said phyllosilicate is a serpentine mineral, a clay mineral, a chlorite mineral or a mica mineral, or mixtures thereof. Preferably, said clay mineral is selected from bentonite, kaolinite, pyrophyllite, vermiculite and a smectite (e.g. montmorillonite, cloisite, laponite, hectorite etc.), or mixtures thereof.

As would be understood by a skilled person, said phyllosilicate can be present in the first and/or second layer.

Preferred films of the present invention have a heat sealing strength of at least 40 N/m as measured by ASTM F88/F88M-15 at 55% relative humidity and 20 °C, more preferably at least 60 N/m, even more preferably at least 80 N/m, even more preferably at least 100 N/m, most preferably at least 120 N/m after the film has been conditioned at 55 % relative humidity at 20 °C for at least one hour and then sealed at a temperature of 120 °C applied for a time of 1 second at a pressure of 3 bar.

Preferred alternative films of the present invention have a heat sealing strength of at least 40 N/m as measured by ASTM F88/F88M-15 at 55% relative humidity and 20 °C, more preferably at least 60 N/m after the film has been conditioned at 55 % relative humidity at 20 °C for at least one hour and then sealed at a temperature of 120 °C applied for a time of 1 second at a pressure of 3 bar.

The present invention also provides a process for preparing a film as hereinbefore described, comprising the steps of:
(i) providing a first layer comprising based on the total weight of the first layer:
   at least 20 wt.-% of one or more salts of alginic acid, and
   at least 5 wt.-% of one or more organic plasticisers;
(ii) providing a second layer comprising based on the total weight of the second layer:
   one or more carbohydrates other than alginic acid and any of its salts,
   at least 5 wt.-% of one or more organic plasticisers, and
   less than 20 wt.-% of alginic acid salts; and
(iii) sealing one surface of the second layer to one surface of the first layer.

In preferred processes of the present invention, step (i) involves use of a pre-formed first layer.

In alternative preferred processes of the present invention, step (ii) involves use of a pre-formed second layer.

In preferred processes of the present invention, step (i) involves forming said first layer. Preferably, said first layer is formed by a casting method, a lamination method or an extrusion method.

In preferred processes of the present invention, step (ii) involves forming said second layer. Preferably, said second layer is formed by a casting method, a lamination method or an extrusion method.

A preferred process of the present invention comprises the steps of:
(a) mixing the at least one salt of alginic acid and the at least one organic plasticiser in water, optionally with sonication, to form a mixture (a);
(b) forming the mixture (a) into said first layer on a surface;
(c) mixing the at least one carbohydrate and the at least one organic plasticiser in water, optionally with sonication, to form a mixture (b); and
(d) forming the mixture (b) into said second layer on said first layer.

Preferably, step (a) involves additionally mixing at least one carbohydrate to form said mixture (a).

Preferably, in step (b) mixture (a) is at a temperature in the range 40 to 85 °C, more preferably 50 to 60 °C (e.g. 55 °C). Most preferably, in step (b) mixture (a) is at ambient temperature.

Preferably, step (c) involves additionally mixing a divalent metal salt to form said mixture (b).

Preferably, step (c) is conducted at a temperature in the range 10 to 90 °C,

Preferably, in step (d) mixture (b) is at a temperature in the range 40 to 85 °C, more preferably 50 to 60 °C (e.g. 55 °C). Most preferably, in step (d) mixture (b) is at ambient temperature

Preferably, prior to step (d) mixture (b) is degassed.

A preferred process of the present invention comprises the steps of:
(a) mixing the at least one carbohydrate and the at least one organic plasticiser in water, optionally with sonication, to form a mixture (c);
(b) forming the mixture (c) into said second layer on a surface;
(c) mixing the at least one salt of alginic acid and the at least one organic plasticiser in water, optionally with sonication, to form a mixture (d);
(d) forming the mixture (d) into said first layer on said second layer.

Preferably, step (a) involves additionally mixing a divalent metal salt to form said mixture (c).

Preferably, step (c) involves additionally mixing at least one carbohydrate to form said mixture (d).

Preferably, step (a) is conducted at a temperature in the range 10 to 90 °C,

Preferably, in step (b) mixture (c) is at a temperature in the range 40 to 70 °C, more preferably 50 to 60 °C (e.g. 55 °C).

Preferably, prior to step (b) mixture (c) is degassed.

Preferably, step (c) is conducted at a temperature in the range 18 to 25 °C, more preferably 20 to 23 °C.

Preferably, in step (d) mixture (d) is at a temperature in the range 10 to 90 ° C.

In a preferred process of the present invention the one or more films are independently made by casting or blown film extrusion, preferably by casting, more preferably solvent casting.

Solvent casting can be a 2-step process where a first layer of material is cast onto a substrate such as Mylar^{®}, or corona treated Mylar^{®} or a metal belt. The mixture cast can be at room temperature or heated. Immediately after coating the material is dried in an oven and the film is reeled onto a core. The roll of first layer (which may still be on the Mylar^{®}) is unpeeled from the roll and reeled through the line again so a second layer can be cast on top of the first layer and again dried in the oven. Again the mixture cast can be at room temperature or heated. This process can be described as a "wet-on-dry process". To control the casting thickness, the casting line is equipped with a system of metallic rollers where the gap between rollers controls the wet thickness of the coating. The line speed and oven temperature are adjusted to obtain the desired dry film thickness and final moisture content. The final dry film is peeled from the backing substrate and is then rolled onto a core and stored until required for wrapping or enclosing a product and optionally sealing the film to form a sachet.

Solvent casting can also be a 1-step continuous process where a first layer of material is cast onto a substrate such as Mylar^{®}, corona treated Mylar^{®} or a metal belt. The mixture cast can be at room temperature or heated. After coating and drying, or partially drying, in an oven, the second layer can be cast on top of the first layer and finally dried in a second oven. Again the mixture cast can be at room temperature or heated. This process can be described as a "wet-on-wet process" or "wet-on-semi-dry process". To control the casting thickness, the line is equipped with a system of metallic rollers where the gap between rollers controls the wet thickness of the coatings. The line speed and oven temperatures are adjusted to obtain the desired final dry film thickness and final moisture content. The final dry film is peeled from the backing substrate and is then rolled onto a core and stored until required for wrapping or enclosing a product and optionally sealing the film to form a sachet.

In both solvent casting processes, it is important to that the final roll of film can be unwound easily and without damaging the film. This is necessary either in the intermediate part of the wet-on-dry process or when using the final film in a product packing line. How easily the film can be unwound is assessed in the Peeling Method herein described.

The present invention also provides a product coated with or enclosed by a film as hereinbefore described.

In a preferred product of the present invention, the film is made exclusively from food-grade materials.

In an alternative preferred product of the present invention, the film is more than 75 %, more preferably more than 80 %, even more preferably more than 85 %, even more preferably more than 90 %, most preferred more than 95 % biodegradable, according to ASTM D6691 after 28 days.

A preferred product of the present invention is a foodstuff, a pharmaceutical product, a cleaning product, an agricultural product (e.g. an animal feed) or medication, a chemical product or a cosmetic product.

Preferably, the product of the present invention is a solid product, a powdered product or a liquid product having a water activity of less than 60%.

An alternative preferred product of the present invention is a solid product selected from a soup or flavouring preparation (e.g. a stock cube), a personal cleanser (e.g. a soap bar, body scrub or solid shampoo), a laundry detergent tablet or bar or a dishwasher detergent tablet.

Preferably, the product of the present invention is a stock cube or a laundry detergent tablet or a dishwasher detergent tablet.

An alternative preferred product of the present invention is a powdered product selected from a powdered food, a powdered drink, powdered milk, powdered soup, powdered hot chocolate, powdered coffee, soap flakes, powdered laundry detergent, and powdered shampoo.

Preferably, the product of the present invention is a powdered drink.

Also preferably, the product of the present invention is a liquid product selected from an oil or a hair care or body care product having a water activity of less than 60%.

The present invention also provides a method of enclosing a product, comprising the steps of:
(i) wrapping the product in a film as hereinbefore described, such that the first layer is the outer layer; and
(ii) heat sealing the film around the product.

As would be understood by a skilled person, the heat sealing step requires contact between sections of film comprising one or more carbohydrates other than alginic acid and any of its salts. For example, a composite film comprising starch and alginic acid salt can be sealed against another composite film comprising starch and alginic acid salt, or to itself. However, if the film is a multilayer film comprising, for example, a starch layer and a alginic acid salt layer, it is necessary to seal the starch layer to another film comprising starch, or to itself. This is because starch can melt (or gelatinise) at much lower temperatures compared to the alginic acid salt. Residual water present in the starch layer also helps lower the melting (or gelatinisation) temperature of the starch.

In a preferred method of the present invention, the duration of step (ii) is less than 2 seconds, more preferably less than 1 second, most preferably less than 0.5 seconds.

In an alternative preferred method of the present invention, step (ii) is conducted at a temperature of less than 160 °C, more preferably less than 140 °C, most preferably less than 120 °C.

The present invention also provides the use of a film as hereinbefore described to enclose a product.

The present invention also provides a sachet prepared by the method as hereinbefore described.

A preferred sachet of the invention is dispersible in water.

The films of the present invention have a high dispersibility in water. This means that they can be used as a packaging material for a product that creates zero waste during end use of the product. For example, the films of the present invention could be used to package a detergent such that during the washing process the film will disperse in water to release the detergent. Alternatively, the films of the present invention could be used to package a foodstuff such that during the cooking process the film will disperse in water to release the foodstuff.

According to the invention, the water dispersibility of the films is assessed using 0.75g samples of each of the final films, conditioned at 55% relative humidity and a temperature of 20°C. Samples are mixed at room temperature using an overhead stirrer at 300 rpm in 300 ml of both reverse osmosis water at 20°C and freshly boiled reverse osmosis water (i.e. having a temperature range 75.1°C to 90.2°C) in a 600 ml beaker for 3 minutes. The end mix is visually inspected for any remaining particles, and their size used to judge water dispersibility on the following scale: Very low - majority of particles >30mm; Low - majority of particles ~20-30mm; Average - majority of particles ~10-20mm; High - majority of particles ~1-10mm; Very high - majority of particles <1mm; Maximum - no visible particles. Dispersibility is reported as an average of two different temperature observations, wherein each observation is assigned an integer value for these purposes. Advantageously, the residue is fully biodegradable meaning that the films do not have a negative impact on the environment.

The present invention also provides the use of a film as hereinbefore described to prepare a sachet.

The present invention also provides a method of releasing a product enclosed in a film as hereinbefore described, comprising the steps of:
(i) placing the enclosed product in water; and
(ii) allowing the film to disperse, thereby releasing the product.

In a preferred method of the invention the product is released in step (ii) during a cooking process.

In an alternative preferred method of the invention the product is released in step (ii) during a washing process.

### BRIEF DESCRIPTION OF THE FIGURES

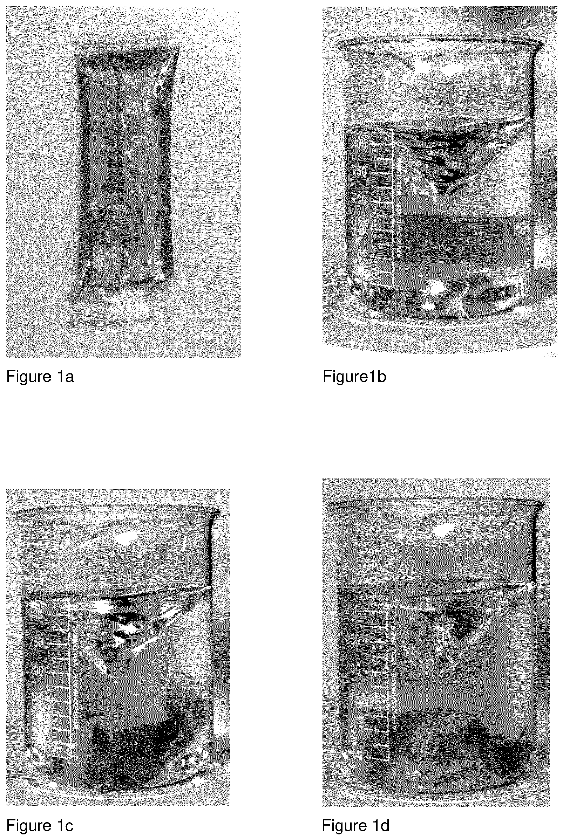

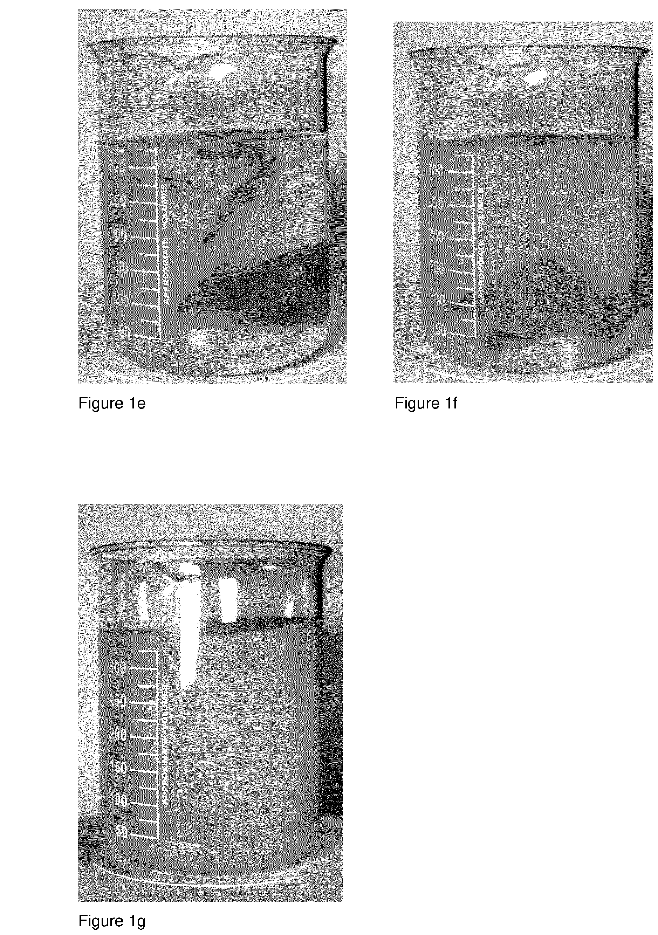

Figure 1a is a photograph of the sachet prepared in Example 13.
Figure 1b is a photograph of the sachet prepared in Example 13 immediately after being placed in a beaker of water.
Figure 1c-g are a series of photographs of the sachet prepared in Example 13 at 2s, 52s, 60s, 72s and 138s, respectively, after being placed in the beaker of water.

### EXAMPLES

### Materials

Alginic acid sodium salt and calcium chloride dihydrate were purchased from Thermo Fisher Scientific. The viscosity of a 1 % solution of alginic acid sodium salt at 20 °C was between 350 and 550 mPas.

Vivapure^{®} FD150 sodium alginate was purchased from JRS, Germany. The viscosity of a 1 % solution of alginic acid sodium salt at 20 °C was between 20 and 50 mPas.

Tapioca starch (Alpha Instant), potato starch (pre-gelled), maize starch and rice starch were purchased from BakeRite.

Food-grade glycerol (APC Pure), propylene glycol and potato starch (hot soluble) were purchased from APC.

Antifoam agent (aqueous-silicone emulsion), Polysorbate 80 and maize amylopectin (starch from corn) from Sigma-Aldrich Co.

Waxy maize starch (Ultratex) was purchased from Special Ingredients Ltd.

Pullulan was purchased from Rongsheng Biotechnology Co. Ltd.

Maltodextrin was purchased from Sigma-Aldrich Co.

Oleic Acid, Sorbitol and thymol were purchased from Thermo Fisher Scientific.

In the Examples that follow, all references to "ambient temperature" are to a temperature of approximately 20°C.

### Example 1: Preparation of alginate monolayer

400ml of water was mixed with 14g of alginic acid in a 600 ml beaker at ambient temperature using an overhead stirrer to form a homogenous solution. 6g of glycerol was then added with stirring and 4 drops of antifoam agent. The mix was stirred for 45 minutes. 25 ml of the mix was poured into a 50 ml Falcon tube. The mix was removed and poured onto a flat glass plate having a Mylar^{®®} surface. The liquid was spread out uniformly over the plate using a knife blade to give a wet film of the alginate mix of 700 microns. The glass plate was then dried overnight at ambient temperature to form the dried film.

### Example 2: Preparation of carbohydrate monolayer

30.0g of tapioca starch (STT) was dispersed in 300ml of deionised water at ambient temperature in a 600 ml flask by overhead stirring. 12.86g of glycerol was then added and the suspension stirred. The suspension was then sonicated using a Bandelin sonicator for 30 minutes at an amplitude of 95%, with a cycle of 1 second on, 0.2 seconds off. The solution was then placed in a sonicator bath for 1 minute at 80 °C to remove any bubbles.

20 ml of the solution was poured into a 50 ml Falcon tube. The solution was then further degassed by removing large bubbles with a pipette, before being allowed to cool to 55 °C and poured onto a flat glass plate having a Mylar^{®} surface. The liquid was spread out uniformly using a knife blade to give a wet film of the starch mix of approximately 400 microns thickness. The plate was then put in the oven for 50 minutes at 80 °C to form the dried film.

### Example 3: Determination of onset melting temperature and sealing strength for carbohydrate monolayers

### (i) Preparation of carbohydrate monolayers

10.0g of carbohydrate was dispersed in 100 ml of deionised water at ambient temperature, in a 250 ml flask by overhead stirring. 4.29g of glycerol was then added and the suspension stirred. The suspension was then sonicated using a Bandelin sonicator for 10 minutes at an amplitude of 95%, with a cycle of 1 second on, 0.2 seconds off. The solution was then placed in a sonicator bath for 1 min at 80 °C to remove any bubbles.

20 ml of the solution was poured into a 50 ml Falcon tube. The solution was then further degassed by removing large bubbles with a pipette, before being allowed to cool to 55 °C and poured onto a flat glass plate having a Mylar^{®} surface. The liquid was spread out uniformly using a knife blade to give a wet film of approximately 400 microns thickness. The plate was then put in the oven for 50 minutes at 80 °C to dry the layer of film.

### (ii) Measurement of onset melting temperature by Differential Scanning Calorimetry (DSC)

The films produced in step (i) were conditioned overnight at 55% relative humidity and 20°C. The onset melting temperature is a function of the whole film composition including moisture level. A small test sample (10-20mg) was cut from each film and accurately weighed. Each sample was placed in 40 µL aluminium pans (#51119870, purchased from Mettler Toledo), and heated from 25°C to 160°C at a heating rate of 10°C/min in a nitrogen atmosphere using a DSC822e from Mettler Toledo. The pan lid was pierced using a 50µm diameter needle prior to the sealing. An empty pan was used as a reference. The normalised heat flow was recorded and plotted as a function of temperature.

The onset melting point of a sample is defined as the first inflection point in the DSC curve showing a rate increase in the heat flow to the sample with increasing temperature. As the sample starts to melt, the heat flow to the sample increases, thus creating a change of gradient and an inflection point in the graph.

Normalised heat flow plots can be visually assessed by an operator to determine the inflection point in the graph. However, this analysis is now typically done using software analysis tools. Such analysis tools are typically included as part of the equipment operating system. Suitable software includes the STARe evaluation software supplied by Mettler-Toledo.

Data from the normalised DSC plots obtained above was analysed using the STARe evaluation software version 16.30 to determine onset melting temperatures. Results are shown in Table 1 below. The thermal properties of a starch mixture are a complex combination of the relative ratio of amylose to amylopectin in the starch, prior thermal treatments and the level and nature of other ingredients.

**Table 1**

| **Carbohydrate** | **Plasticiser** | **Onset melting temperature, °C** |
|---|---|---|
| Tapioca starch - Alpha Instant (STT) | Glycerol | 67.3 |
| Tapioca starch - Alpha Instant with Ca²⁺ ions (STTc) | Glycerol | 76.2 |
| Maize amylopectin (AMP) | Glycerol | 73.6 |
| Hot soluble potato starch (APC) | Glycerol | 78.8 |
| Pre-gelled potato starch (BPS) | Glycerol | 78.5 |
| Ultratex waxy maize starch (CSS) | Glycerol | 122.1 |
| Maize starch (SMA) | Glycerol | 78.2 |
| Rice starch (SRX) | Glycerol | 73.5 |
| Pullulan | Glycerol | 61.0 |
| Pullulan + Hot soluble potato starch (APC) | Glycerol | 77.5 |
| Maltodextrin | Glycerol | 72.5 |

### (iii) Determination of sealing strength

Test samples of some of the layers produced in step (i) were prepared and subjected to a seal strength measurement. Test samples of width 25 mm were cut to the dimensions given in ASTM F88/F88M-15 and conditioned overnight at 55% RH and 20°C. Test strip samples were then sealed using an RDM heat sealer to give a fin seal. Sealed test specimens were tested using technique A (unsupported) in a Tinnius Olsen tensile tester. A sealing temperature of 100 °C and a dwell time of 1 second were employed. The results are shown in Table 2 below.

**Table 2**

| **Starch** | **Plasticiser** | **Onset melting temperature, °C** | **Maximum heat sealing strength @ 100°C, 1 sec dwell, N/m** |
|---|---|---|---|
| STT | Glycerol | 67.3 | 544.0 |
| BPS | Glycerol | 78.5 | 189.2 |
| CSS | Glycerol | 122.1 | 12.8 |

As demonstrated above, the onset melting temperature of a material relates inversely to its ability to form a strong seal. For example, the STT-based layer has a low onset temperature and forms a strong seal. The BPS-based layer has a slightly higher onset temperature and also forms a strong seal. However, the CSS-based layer has a much higher onset temperature and consequently forms a seal with a much lower sealing strength.

A lower onset temperature for the carbohydrate-containing layer of the multilayer films of the present invention is advantageous for multiple reasons. Not only has it been demonstrated that a stronger seal strength can be achieved, but a lower onset temperature means that a lower temperature need be applied to the external alginate-containing layer of the multilayer films of the present invention in order to result in effective sealing of the internal carbohydrate-containing layer. This means that the film degradation (e.g. as a result of burning) is avoided, and also that shorter dwell times are required to form the seal, making the sealing process more industrially viable.

### Example 4: Preparation of alginate - starch multilayer film

### (i) Preparation of alginate mixture

400ml of water was mixed with 14g of alginic acid in a 600 ml beaker at ambient temperature using an overhead stirrer to form a homogenous solution. 6g of glycerol was then added with stirring and 4 drops of antifoam agent. The mix was stirred for 45 minutes. The mix was then further degassed under vacuum using a lab speed mixer.

### (ii) Film formation - alginate layer

25 ml of the mix produced in step (i) was poured into a 50 ml Falcon tube. The mix was removed and poured onto a flat glass plate having a Mylar^{®} surface. The liquid was spread out uniformly over the plate using a knife blade to give a wet film of the alginate mix of 1100 microns. The glass plate was then dried overnight at ambient temperature to form the dried film layer.

### (iii) Preparation of starch mixture

40.0g of tapioca starch (STT) was dispersed in 400ml of deionised water at ambient temperature in a 600 ml flask by overhead stirring. 17.14g of glycerol was then added and the suspension stirred. The suspension was then sonicated using a Bandelin sonicator for 40 minutes at an amplitude of 95%, with a cycle of 1 second on, 0.2 seconds off. The solution was then placed in a sonicator bath for 1 minute at 80 °C to remove any bubbles.

### (iv) Film formation - starch layer

7 ml of the mix produced in step (iii) was poured into a 50 ml Falcon tube. The mix was then further degassed by removing large bubbles with a pipette, before being allowed to cool to 55 °C and then spread over the exposed surface (i.e. the surface not in contact with the glass plate) of the dried film prepared in step (ii) using a knife blade to give a wet film of the starch mix of approximately 250 microns thickness. The plate was then put in the oven for 30 minutes at 80 °C to form the multilayer film.

### Comparative Example 1: Preparation of alginate/starch monolayer

50 ml of the mix produced in step (iii) of Example 4 was added to 220 ml of the mix produced in step (i) of Example 4 in a 400 ml beaker using an overhead stirrer at ambient temperature to form a homogeneous mixture. The mix was placed in a sonicator bath for 5 minutes at 80 °C to remove the bubbles. 30 ml of the mix was poured into a 50 ml Falcon tube. The mix was removed, poured onto a flat glass plate having a Mylar^{®} surface and spread out uniformly using a knife blade to give a wet film of the alginate-starch blend of 1350 microns. The glass plate was then dried overnight at ambient temperature to form the dried film.

### Example 5: Measurement of film tensile strength and elongation

Rectangular test samples of length 80mm and width 10 mm were cut (which falls within the described specifications in ASTM D882) and conditioned overnight at 55% RH and 20°C. The test samples were tested using a Tinnius Olsen tensile tester with flat grip inserts, an initial grip separation of 50mm and a testing speed of 50mm/min (strain rate of 1mm/mm•min).

Utmost care was exercised in cutting specimens to prevent nicks and tears that cause premature failures and ensure repetitive sample quality.

The results are shown in Table 3 below. Tensile strength was reported in MPa and elongation at break in %.

**Table 3**

| **Example** | **Tensile strength (MPa)** | **Elongation at break (%)** |
|---|---|---|
| Example 1 (comparative) | 29.5 | 29.2 |
| Example 2 (comparative) | 1.8 | 50.4 |
| Example 4 | 23.9 | 36.7 |
| Comparative Example 1 | 20.3 | 13.9 |

The alginate film of Example 1 has very good tensile strength whilst the starch film of Example 2 does not, it being too brittle to be useful. When the two materials are combined, the resulting film has acceptable tensile strength whether as a blend or as a multilayer. However, the blend (Comparative Example 1) has little elongation whilst the multilayer (Example 4) has an elongation that is closer to the elongation of the alginate film of Example 1. The results demonstrate that the multilayer films of the present invention have a good strength and are not prone to cracking under elongation strain.

### Example 6: Measurement of seal strength

Test samples of width 25 mm were cut to the dimensions given in ASTM F88/F88M-15 and conditioned overnight at 55% relative humidity and 20°C. Test strip samples were then sealed using an RDM heat sealer to give a fin seal. Sealed test specimens were tested using technique A (unsupported) in a Tinnius Olsen tensile tester. A sealing temperature of 140 °C and a dwell time of 1 second and pressure of 3 bar were employed. The results are shown in Table 4 below. The maximum force encountered as each specimen was stressed to failure is reported as Newtons/meter (N/m).

**Table 4**

| **Example** | **Film thickness (µm)** | **Heat sealing maximum force/width (N/m)** |
|---|---|---|
| Example 1 (comparative) | - | 0 |
| Example 2 (comparative) | 112 | 196 |
| Example 4 | 58 | 746 |
| Comparative Example 1 | 52 | 11.2 |

The results show that the alginate film of Example 1 does not seal at all, whilst the starch film of Example 2 has a good seal strength. When the two materials are combined into a blend (Comparative Example 1), the resulting film has a poor seal strength, but if they are combined into a multilayer (Example 4), an extremely high seal strength is achieved. The results demonstrate that the multilayer films of the present invention have excellent seal strengths.

The alginate/starch multilayer of Example 4 (having a film thickness of 58µm, and conditioned and stored at 55% relative humidity and a temperature of 20°C) was taken on for further seal strength testing, at different seal temperatures and dwell times with a pressure of 3 bar. The results are shown in Table 5 below.

**Table 5**

| **Ex. 4** | **Temperature (°C)** | **Dwell time (s)** | | | | |
|---|---|---|---|---|---|---|
| | | 0.2 | 0.5 | 1 | 2 | 5 |
| | 80 | | | 178 N/m | 103 N/m | 121 N/m |
| | 100 | 157 N/m | 117 N/m | 195 N/m | 354 N/m | 399 N/m |
| | 120 | 115 N/m | 456 N/m | 488 N/m | 576 N/m | 768 N/m |
| | 140 | 202 N/m | 608 N/m | 746N/m | 856 N/m | 900 N/m |
| | 160 | 393 N/m | 320 N/m | 222 N/m | 104 N/m | |
| | 180 | 173 N/m | 122 N/m | 114 N/m | | |

The results show that for a multilayer film of the present invention, the longer the dwell time, the lower the temperature required to achieve an effective seal strength.

### Example 7: Preparation of alginate monolayer with Ca²⁺ ions

400ml of water was mixed with 14g of alginic acid in a 600 ml beaker at ambient temperature using an overhead stirrer to form a homogenous solution. 6g of glycerol was then added with stirring and 4 drops of antifoam agent. The mix was stirred for 45 minutes. 0.26g of CaCl₂ was added and stirred into the solution. 50 ml of the mix was poured into a 50 ml Falcon tube. The mix was removed, and poured onto a flat glass plate having a Mylar^{®} surface. The liquid was spread out uniformly over the plate using a knife blade to give a wet film of the alginate mix of 1100 microns. The glass plate was then dried overnight at ambient temperature to form the dried film.

### Example 8: Preparation of starch monolayer with Ca²⁺ ions

20.0g of tapioca starch (STT) was dispersed in 200 ml of deionised water at ambient temperature in a 600 ml flask by overhead stirring. 8.57g of glycerol was then added and the suspension stirred. The suspension was then sonicated using a Bandelin sonicator for 20 minutes at an amplitude of 95%, with a cycle of 1 second on, 0.2 seconds off. 0.41g of CaCl₂ was added and stirred into the solution. The solution was then placed in a sonicator bath for 1 minute at 80 °C to remove any bubbles.

20 ml of the mix was poured into a 50 ml Falcon tube. The mix was then further degassed by removing large bubbles with a pipette, before being allowed to cool to 55 °C and poured onto a flat glass plate having a Mylar^{®} surface. The liquid was spread out uniformly using a knife blade to give a wet film of the starch mix of approximately 400 microns thickness. The plate was then put in the oven for 50 minutes at 80 °C to form the dried film.

### Comparative Example 2: Preparation of alginate-starch monolayer with Ca²⁺ ions

This film was prepared according to the method of Comparative Example 1, except that 0.30g of CaCl₂ was added during overhead stirring once the homogeneous mixture had been formed and before removing bubbles in a sonicator bath.

### Example 9: Preparation of alginate-starch multilayer film with Ca²⁺ ions

### (i) Preparation of alginate mixture

400ml of water was mixed with 14g of alginic acid in a 600 ml beaker at ambient temperature using an overhead stirrer to form a homogenous solution. 6g of glycerol was then added with stirring and 4 drops of antifoam agent. The mix was stirred for 45 minutes.

### (ii) Film formation - alginate layer

50 ml of the mix produced in step (i) was poured into a 50 ml Falcon tube. The mix was removed and poured onto a flat glass plate having a Mylar^{®} surface. The liquid was spread out uniformly over the plate using a knife blade to give a wet film of the alginate mix of 1100 microns. The glass plate was then dried overnight at ambient temperature to form the dried layer.

### (iii) Preparation of starch and calcium mixture

20.0g of tapioca starch (STT) was dispersed in 200ml of deionised water at ambient temperature in a 600 ml flask by overhead stirring. 8.57g of glycerol was then added and the suspension stirred. The suspension was then sonicated using a Bandelin sonicator for 20 minutes at an amplitude of 95%, with a cycle of 1 second on, 0.2 seconds off. 0.41g of CaCl₂ was added and stirred into the solution. The solution was then placed in a sonicator bath for 1 minute at 80 °C to remove any bubbles.

### (iv) Film formation - starch/calcium layer

20 ml of the mix produced in step (iii) was poured into a 50 ml Falcon tube. The mix was then further degassed by removing large bubbles with a pipette, before being allowed to cool to 55 °C and spread over the exposed surface (i.e. the surface not in contact with the glass plate) of the dried film prepared in step (ii) using a knife blade to give a wet film of the starch mix of approximately 250 microns thickness. The plate was then put in the oven for 30 minutes at 80 °C to form the multilayer film.

### Example 10: Preparation of starch-alginate multilayer film with calcium ions

### (i) Preparation of starch and calcium mixture

20.0g of tapioca starch (STT) was dispersed in 200ml of deionised water at ambient temperature in a 600 ml flask by overhead stirring. 8.57g of glycerol was then added and the suspension stirred. The suspension was then sonicated using a Bandelin sonicator for 20 minutes at an amplitude of 95%, with a cycle of 1 second on, 0.2 seconds off. 0.41g of CaCl₂ was added and stirred into the solution. The solution was then placed in a sonicator bath for 1 minute at 80 °C to remove any bubbles.

### (ii) Film formation - starch/calcium layer

20 ml of the mix produced in step (i) was poured into a 50 ml Falcon tube. The mix was then further degassed by removing large bubbles with a pipette, before being allowed to cool to 55 °C and then poured onto a flat glass plate having a Mylar^{®} surface. The liquid was spread out uniformly using a knife blade to give a wet film of the starch mix of approximately 250 microns thickness. The plate was then put in the oven for 30 minutes at 80 °C to form the film.

### (iii) Preparation of alginate mixture

400ml of water was mixed with 14g of alginic acid in a 600 ml beaker at ambient temperature using an overhead stirrer to form a homogenous solution. 6g of glycerol was then added with stirring and 4 drops of antifoam agent. The mix was stirred for 45 minutes.

### (iv) Film formation - alginate layer

50 ml of the mix produced in step (iii) was poured into a 50 ml Falcon tube. The mix was removed, and spread over the exposed surface (i.e. the surface not in contact with the glass plate) of the dried film prepared in step (ii) using a knife blade to give a wet film of the alginate mix of approximately 1100 microns thickness. The glass plate was then dried overnight at ambient temperature to form the multilayer film.

### Example 11: Measurement of film tensile strength, elongation, seal strength and water dispersibility

The tensile strength and elongation at break of the films of Examples 4 and 7 to 10 as well as Comparative Example 2 were tested according to the methods outlined in Example 5.

The seal strength of the films of Examples 4 and 7 to 10 as well as Comparative Example 2 was tested according to the method outlined in Example 6, except that a sealing temperature of 100 °C and a dwell time of 1 second were employed.

The water dispersibility of the films of Examples 4 and 7 to 10 as well as Comparative Example 2 was assessed using 0.75g samples of each of the final films, conditioned at 55% relative humidity and a temperature of 20°C. Samples were mixed at room temperature using an overhead stirrer at 300 rpm in 300 ml of both reverse osmosis water at 20°C and freshly boiled reverse osmosis water (i.e. having a temperature range 75.1°C to 90.2°C) in a 600 ml beaker for 3 minutes. The end mix was visually inspected for any remaining particles, and their size used to judge water dispersibility on the following scale: Very low - majority of particles >30mm; Low - majority of particles ~20-30mm; Average - majority of particles ~10-20mm; High - majority of particles ~1-10mm; Very high - majority of particles <1mm; Maximum - no visible particles. Dispersibility was reported as an average of the two different temperature observations, wherein each observation can be assigned an integer value for these purposes.

The results of all these tests are shown in Table 6 below.

**Table 6**

| **Ex.** | **Heat sealing max force/width (N/m)** | **Tensile strength (MPa)** | **Elongation at break (%)** | **Water dispersibility** |
|---|---|---|---|---|
| Ex. 4 | 194.8 | 23.9 | 36.7 | High |
| Ex. 7 (comp.) | 10.0 | 23.1 | 4.37 | High |
| Ex. 8 (comp.) | 63.2 | 0.219 | 59.5 | High |
| Ex. 2 (comp.) | 28.2 | 10.1 | 47.8 | High |
| Ex. 9 | 600 | 8.27 | 20.2 | High |
| Ex. 10 | 516 | 16.2 | 43.5 | Very low |

The results show that the inclusion of calcium ions in the alginate monolayer (example 7) leads to low values of seal strength. In the case of starch monolayer (example 8) the inclusion of calcium ions reduces the seal strength to lower but still acceptable values compared to starch monolayers without calcium ions (example 2).

At low heat sealing temperatures (e.g. 100°C as employed here) the multilayer film without calcium ions (Example 4) has a seal strength of 194.8 N/m, whereas inclusion of Ca²⁺ ions in the starch layer increases the seal strength to between 516 to 600 N/m (Examples 9 and 10). Without wishing to be bound by theory, this is thought to be due to a small amount of cross-linking occurring between the alginate ions and the Ca²⁺ ions at the interface between the two layers. Interestingly, this effect can be achieved by either first casting the alginate layer or the starch layer. In the absence of Ca²⁺ ions, is it not possible to first cast the starch layer as the high water content of the alginate mixture to be cast will destroy the first starch layer. However, with the inclusion of Ca²⁺ ions in the starch layer this becomes possible. Again, without wishing to be bound by theory, this is thought to be due to alginate/Ca²⁺ cross-linking at the interface between the two layers which provides a barrier to water. In addition, it has been found that the multilayer having the starch layer formed first (Example 10) has a higher tensile strength and elongation than the multilayer with the alginate layer formed first (Example 9). Without wishing to be bound to any theory, it is believed that when the alginate layer interacts with calcium ions, it starts crosslinking. In the case where the alginate layer is formed first (Example 9), the alginate is dry and solid when the wet starch starts dissolving at the interface due to the water it carries. Thus, it also crosslinks at the interface, but since the remaining body of the layer is solid it rests un-crosslinked. In the case where the starch layer is formed first (Example 10), the alginate layer is still wet and very mobile, so a higher level of crosslinking can be achieved until the point where it is fully dried.

The water dispersibility of the Ca²⁺-containing multilayer films is dependent on the order of layer formation. When the alginate layer is formed first (as in Example 9) the final multilayer film has high dispersibility, similar to that of the multilayer film prepared without Ca²⁺ ions (Example 4). When the starch layer is formed first (as in Example 10) the final multilayer film has very low dispersibility. Without wishing to be bound to any theory, it is believed that in the case of Example 9 crosslinking is achieved only at the interface of the two layers, whereas in Example 10 crosslinking is achieved in a greater volume. Therefore, the order of layer formation can be used as a means of controlling the water dispersibility of the film (e.g. for different end use applications), whilst maintaining good heat sealing properties.

### Example 12: Moisture content of films

The moisture content of various films prepared in the above examples was measured using an Ohaus MB23 moisture analyser, wherein the film samples had first been conditioned at 55% relative humidity and a temperature of 20°C. The results are shown in Table 7 below.

**Table 7**

| **Example** | **Moisture content (wt.-%, based on total film weight)** |
|---|---|
| Example 3 (AMP) (comparative) | 8.3 |
| Example 3 (APC) (comparative) | 10.5 |
| Example 3 (BPS) (comparative) | 10.4 |
| Example 3 (Pullulan) (comparative) | 10.2 |
| Example 1 (comparative) | 13.9 |
| Example 4 | 18.3 |
| Example 10 | 14.6 |

### Example 13: Dispersion of laundry detergent sachet

Sachets were produced using the multilayer film of Example 9, by heat sealing along the length and ends of the film with an RS PRO heat sealer on power 2. The sealed sachets contained a concentrated laundry liquid detergent used in liquid laundry pods.

The sachets could be easily handled and maintained their integrity. When added to 250 ml of water at 20°C in a 400 ml beaker and stirred at ~340 rpm with a magnetic stirrer, the sachets disintegrated and fully released their contents after about 2 minutes and 20 seconds as shown in Figures 1a-g.

This Example demonstrates one of the multiple uses of the multilayer films of the present invention, namely to prepare heat-sealed sachets to provide a single dose of laundry liquid detergent. The sachets can be safely handled by the consumer and will release the detergent on contact with water in the washing machine.

### Example 14: Preparation of alginate - starch multilayer film with mixed plasticisers

### (i) Preparation of alginate mixture

In a plastic container, 6.49 g of Oleic Acid and 3.20g of Polysorbate 80 was added to 200 ml of Deionised water. This was sonicated with A Bandelin sonicator for 5 mins at an amplitude of 50% with a cycle of 1 second on 0.2 seconds off to form an emulsion.

In a Klarstein Grand Prix food processor (500W power, 2.5 litre capacity) fitted with 4 standard stainless steel blades, while mixing at Speed 4, the following room temperature materials were added: 1800.00 g of Reverse Osmosis Water, 56.54 g of Glycerol and 56.54g Sorbitol. Next the sonicated oleic acid emulsion prepared above was added to this mixture, followed by 210.00 g of Vivapure^{®} sodium alginate.

The food processor was set at a temperature of 85°C and left to mix for 60 minutes, whilst every 10 minutes scooping the material that accumulated on the walls back into the mixture.

The mixture was then transferred to a Hauschild Speedmixer for 3 mins at 50mBars and 1500rpm and left to cool to room temperature.

### (ii) Film formation - alginate layer

80-100 mls of the mixture produced in step (i) was poured, at room temperature, onto a flat glass plate. The liquid was spread out uniformly over the plate using a RK Print K303S multi coater with a Doctor Knife blade set at Speed 3 to give a wet film of the alginate mixture of 600 microns. The glass plate was then dried in the oven at 50°C for 40 minutes to form the dried film layer.

### (iii) Preparation of starch mixture

In a Klarstein Grand Prix food processor (500W power, 2.5 litre capacity) fitted with 4 standard stainless steel blades, while mixing at Speed 4, the following room temperature materials were added: 2000.00 g of Reverse Osmosis Water, 45.00 g of Glycerol and 45.00g Sorbitol. Next 210.00 g of Tapioca Starch (STT).

The food processor was set at a temperature of 85°C and left to mix for 60 minutes, whilst every 10 minutes scooping the material that accumulated on the walls back into the mixture.

The mixture was then transferred to a Hauschild Speedmixer for 3 mins at 50mBars and 1500rpm and left to cool to room temperature.

### (iv) Film formation - starch layer

30-45 mls of the mix produced in step (iii) was poured at room temperature and then spread over the exposed surface (i.e. the surface not in contact with the glass plate) of the dried film prepared in step (ii) using a RK Print K303S multi coater with a Doctor Knife blade set at Speed 3 to give a wet film of the starch mixture of approximately 350 microns thickness. The plate was then put in the oven for 15 minutes at 50 °C to form the multilayer film.

### Example 15: Preparation of alginate - starch multilayer film on solvent casting line

### (i) Preparation of alginate mixture

For each film the alginate layer was prepared by first adding the following room temperature materials to a Klarstein Grand Prix food processor (500W power, 2.5 litre capacity) fitted with 4 standard stainless steel blades, while mixing at Speed 4:
a) For film 15A: 2000 g of Reverse Osmosis Water, 90.00 g of Glycerol. and 210.00 g of Vivapur^{®} sodium alginate.
b) For film 15B 2000 g of Reverse Osmosis Water, 90.00 g of Glycerol. and 210.00 g of Vivapur^{®} sodium alginate.
c) For film 15C: 2000 g of Reverse Osmosis Water, 56.54 g of Glycerol, 56.54 g of Sorbitol and 210.00 g of Vivapur^{®} sodium alginate.
d) For film 15D: 2000 g of Reverse Osmosis Water, 56.54 g of Glycerol, 56.54 g of Sorbitol and 210.00 g of Vivapur^{®} sodium alginate.

In each case the food processor was set at a temperature of 85°C and left to mix for 60 minutes, whilst every 10 minutes scooping the material that accumulated on the walls back into the mixture. Each mixture was then transferred to a Hauschild Speedmixer for 3 mins at 50mBars and 1500rpm and left to cool to room temperature.
For film 15E, preparation of the alginate mixture was as in Example 14 part (i).

### (ii) Preparation of starch mixture

For each film the starch layer was prepared by first adding the following room temperature materials to a Klarstein Grand Prix food processor (500W power, 2.5 litre capacity) fitted with 4 standard stainless steel blades, while mixing at Speed 4:
a) For film 15A: 2000 g of Reverse Osmosis Water, 75.00 g of Glycerol and 0.30 g Thymol. Next 300.00 g of Tapioca Starch (STT) was added progressively.
b) For Film 15B: 2000 g of Reverse Osmosis Water, 64.29 g of Glycerol, 64.29 g of Sorbitol and 0.30 g Thymol. Next 300.00 g of Tapioca Starch (STT) was added progressively.
c) For film 15C: 2000.00 g of Reverse Osmosis Water, 75.00 g of Glycerol, and 0.30 g Thymol. Next 300.00 g of Tapioca Starch (STT) was added progressively.
d) For film 15D: 2000.00 g of Reverse Osmosis Water, 64.29 g of Glycerol, 64.29 g of Sorbitol and 0.3 g Thymol. Next 300.00 g of Tapioca Starch (STT) was added progressively.

In each case the food processor was set at a temperature of 85°C and left to mix for 60 minutes, whilst every 10 minutes scooping the material that accumulated on the walls back into the mixture. Each mixture was then transferred to a Hauschild Speedmixer for 3 mins at 50mBars and 1500rpm and left to cool to room temperature.

For film 15E, preparation of the starch mixture was as in Example 14 part (iii).

### (iii) Solvent casting

Films were prepared by drying the alginate mixture into a first layer followed by the starch mixture into a second layer by a solvent casting wet-on-dry process, on a line running at 4m/min through a 10m long oven, on a Mylar^{®} substrate with a width of 500mm. For film 15E the Mylar^{®} substrate had been corona treated. The oven conditions were set as in Table 8, and the roller settings and line speed were varied to achieve the required dry thickness and moisture content.

**Table 8**

| | Oven Temp | | | Target final moisture content measured at 55% RH | Target layer dry thickness |
|---|---|---|---|---|---|
| | Zone 1 (°C) | Zone 2 (°C) | Zone 3 (°C) | % | microns |
| 1^{st} layer casting conditions | 120 | 130 | 130 | 13 +/- 2 | 45 +/- 5 |
| 2^{nd} layer casting conditions | 105 | 105 | 105 | 10 +/- 2 | 35-15 +/- 5 |

### Example 16: Properties of alginate - starch multilayer films prepared on solvent casting line

The films prepared in Example 15 were then tested for strength and elongation, the ability to peel the film from the roll, sealing strength and dispersibility in water. These are all important properties to be able to handle the films in industrial packing lines, form sachets around products and disperse the packaging in water to release the contents are required.
The tensile strength and elongation at break of the films of were tested according to the methods outlined in Example 5. The results are given in Table 9.

**Table 9**

| Example | 1^{st} / 2^{nd} dry layer thickness (microns) | Tensile strength (MPa) @ 55%RH | Elongation at break (%) @ 55% RH |
|---|---|---|---|
| Film 15A | 45/22 | 17.7 | 48.9 |
| Film 15B | 45/22 | 7.6 | 57.1 |
| Film 15C | 45/22 | 13.3 | 54.5 |
| Film 15D | 45/35 | 9.4 | 56.1 |
| Film 15E | 40/15 | 8.5 | 42.3 |

All the films had good tensile strength and elongation making them suitable films for packing line.

The film peeling was tested according the "Peeling Test" herein described. Prior to rolling, the sample was equilibrated at the chosen relative humidity for 24 hours. Typically testing was done at 33%, 44%, 55% and 75% relative humidity to cover the range of humidities experienced in an industrial environment. A small 1cm diameter cardboard core was used to roll a strip of film, typically 25cm long and 4cm wide, onto it. This rolled up film was left for 24 hours in the chosen humidity at 23°C. The film was then peeled from the roll and assessed according to the scale in Table 10. The results are given in Table 11

**Table 10**

| | |
|---|---|
| Pass | no resistance |
| | slight resistance |
| | some resistance |
| | a lot of resistance |
| Borderline | parts of the film are stuck |
| Fail | completely stuck, unable to unroll |

The seal strength of the films was tested according to the method outlined in Example 6, except that a sealing temperature of 130 °C and a dwell time of 1 second and 4 bar were employed. The results are given in Table 11.

The water dispersibility was tested by the method as given in Example 11. The results are given in Table 11.

**Table 11**

| Example | Peeling test | Heat sealing max force/ width (N/m) @ 55%RH | Water dispersibility |
|---|---|---|---|
| Film 15A | Fail @ all RH | n/a | very good |
| Film 15B | Fail @ all RH | n/a | very good |
| Film 15C | @33% RH pass no resistance | 209.2 | very good |
| | @55% RH pass with a lot of resistance | | |
| Film 15D | @33% RH pass no resistance | 191.2 | very good |
| | @55%RH pass with a lot of resistance | | |
| Film 15E | @33% RH pass no resistance | 210.4 | very good |
| | @55%RH pass with slight resistance | | |
| | @75% RH borderline | | |

In the Peeling Test, films 15A and 15B were very difficult to unpeel from the roll and failed at all relative humidities. This would make it difficult to use the casting line process due to the inability to roll the final films, but other casting and drying techniques could be used. Both these films had only glycerol as the plasticiser in the first layer.

Films 15C and 15D both passed the Peeling Test at 33% RH with no resistance and at 55% RH with some resistance. Both films comprised a first layer with a mixed plasticiser system of both Glycerol and Sorbitol.

Film 15E also passed the Peeling Test at 33% RH with no resistance, at 55% RH with only slight resistance and at 75% RH with some resistance. This film contained a first layer with a mixed plasticiser system of Glycerol, Sorbitol and a fatty acid, oleic acid.

Films 15C, 15D and 15E all had good maximum heat-sealing strengths. Films 15A and 15B were also suitable for heat sealing as they have the same second layer as Films 15C and 15D. All these films would also be suitable for preparing sealed closed sachets and other sealed packaging.

All films had very good dispersibility in water demonstrating that sachets formed from these films would be suitable for releasing their contents into water during use, such as in dishwashers, washing machines or in the shower, bath or sink.

### Example 17: Properties of alginate - starch multilayer films with propylene glycol

### (i) Preparation of alginate mixture

In a Klarstein Grand Prix food processor (500W power, 2.5 litre capacity) fitted with 4 standard stainless steel blades, while mixing at Speed 4 the following room temperature materials were added: 2000 g of Reverse Osmosis Water, 35 g of Glycerol, 35 g of Sorbitol, 70 g of Propylene Glycol and 210 g of Vivapur^{®} Alginate.

The food processor was set at a temperature of 85°C and left to mix for 60 minutes, whilst every 10 minutes scooping the material that accumulated on the walls back into the mixture. The mixture was then transferred to a Hauschild Speedmixer for 3 mins at 50mBars and 1500rpm and left to cool to room temperature.

### (ii) Film formation - alginate layer

80-100 mls of the mixture produced in step (i) was poured, at room temperature, onto a flat glass plate. The liquid was spread out uniformly over the plate using a RK Print K303S multi coater with a Doctor Knife blade set at Speed 3 to give a wet film of the alginate mixture of 600 microns. The glass plate was then dried in the oven at 50°C for 40 minutes to form the dried film layer.

### (iii) Preparation of starch mixture

In a Klarstein Grand Prix food processor (500W power, 2.5 litre capacity) fitted with 4 standard stainless steel blades, while mixing at Speed 4, the following room temperature materials were added: 2000.00 g of Reverse Osmosis Water, 90.00 g of Glycerol. Next 210.00 g of Tapioca Starch (STT).

The food processor was set at a temperature of 85°C and left to mix for 60 minutes, whilst every 10 minutes scooping the material that accumulated on the walls back into the mixture. The mixture was then transferred to a Hauschild Speedmixer for 3 mins at 50mBars and 1500rpm and left to cool to room temperature.

### (iv) Film formation - starch layer

30-45 mls of the mix produced in step (iii) was poured at room temperature and then spread over the exposed surface (i.e. the surface not in contact with the glass plate) of the dried film prepared in step (ii) using a RK Print K303S multi coater with a Doctor Knife blade, set at Speed 3, to give a wet film of the starch mixture of approximately 350 microns thickness. The plate was then put in the oven for 15 minutes at 50 °C to form the multilayer film.

The Film 17A prepared had good mechanical properties. The peeling was tested according the "Peeling Test" described in Example 15. The seal strength of the films was tested according to the method outlined in Example 6, except that a sealing temperature of 130 °C and a dwell time of 1 second and 4 bar were employed.

The results are given in Table 11.

**Table 11**

| Example | 1^{st} / 2^{nd} dry layer thickness (microns) | Peeling test | Heat sealing max force/ width (N/m) @ 55%RH | Water dispersibility |
|---|---|---|---|---|
| Film 17A | 45/15 | @33% RH pass with no resistance | 172.8 | Very good |
| | | @55% RH pass with some resistance | | |

Film 17A contained a mixture of plasticisers glycerol, sorbitol and propylene glycol in the first layer. Propylene glycol did not have a detrimental effect on Heat Sealing, as can be seen by comparison with the similar value for Film 15C. There was a small improvement in the peeling performance for Film 17A versus 15C.

## Claims

1. A film comprising:
a first layer comprising based on the total weight of the first layer:
at least 20 wt.-% of one or more monovalent salts of alginic acid, and
at least 5 wt.-% of one or more organic plasticisers;
a second layer comprising based on the total weight of the second layer:
one or more carbohydrates other than alginic acid and any of its salts,
at least 5 wt.-% of one or more organic plasticisers, and
less than 20 wt.-% of alginic acid salts;
wherein one surface of the second layer is sealed to one surface of the first layer.

2. A film as claimed in claim 1, wherein the film has a thickness of between 20 µm and 120 µm.

3. A film as claimed in any one of claims 1 and 2, wherein the first layer further comprises one or more divalent alginic acid salts selected from calcium alginate and magnesium alginate and/or wherein the second layer has an onset melting temperature in the range of from 55 °C to 85°C, determined as described in Example 3 of the specification, preferably wherein the second layer comprises a starch and/or pullulan.

4. A film as claimed in any one of claims 1 to 3, wherein the film comprises based upon the total weight of the film 3-90 wt.-%, preferably 15-85 wt.-%, more preferably 25-80 wt.-%, most preferably 35-70 wt.-%, of one or more alginic acid salts determined according to the HPLC method in Journal of Chromatographic Science 2013; 51: 208-214.

5. A film as claimed in any one of claims 1 to 4, wherein the film has a heat sealing strength of at least 40 N/m, preferably at least 60 N/m, more preferably at least 80 N/m, even more preferably at least 100 N/m, most preferably at least 120 N/m, as measured by ASTM F88/F88M-15 at 55% relative humidity and 20 °C after the film has been conditioned at 55 % relative humidity and at 20 °C for at least one hour and then sealed at a temperature of 120 °C and a pressure of between 1 and 3 bar applied for a time of 1 second.

6. A film as claimed in any one of claims 1 to 5, wherein the organic plasticiser in the first layer is selected from glycerol, polyethylene glycol, propylene glycol, sorbitol, mannitol, xylitol, triethyl citrate, oleic acid, glucose, mannose, fructose, sucrose, urea, lecithin, waxes, amino acids, lactic acid, citric acid, glycolic acid, malic acid, tartaric acid, and mixtures thereof, with a mixture of glycerol, sorbitol and oleic acid being preferred.

7. A film as claimed in any one of claims 1 to 6, wherein the organic plasticiser in the second layer is selected from glycerol, polyethylene glycol, sorbitol, mannitol, xylitol, triethyl citrate, glucose, mannose, fructose, sucrose, urea, lecithin, amino acids, lactic acid, citric acid, glycolic acid, malic acid, tartaric acid, and mixtures thereof, with a mixture of glycerol and sorbitol being preferred.

8. A process for preparing a film as claimed in any one of claims 1 to 7, comprising the steps of:
(i) providing a first layer comprising based on the total weight of the first layer:
at least 20 wt.-% of one or more monovalent salts of alginic acid, and
at least 5 wt.-% of one or more organic plasticisers;
(ii) providing a second layer comprising based on the total weight of the second layer:
one or more carbohydrates other than alginic acid and any of its salts,
at least 5 wt.-% of one or more organic plasticisers, and
less than 20 wt.-% of alginic acid salts; and
(iii) sealing one surface of the second layer to one surface of the first layer.

9. A product enclosed by a film according to any one of claims 1 to 7.

10. The product of claim 9, wherein the film is more than 75 %, preferably more than 80 %, more preferably more than 85 %, even more preferably more than 90 %, most preferably more than 95 % biodegradable, according to ASTM D6691 after 28 days testing.

11. A method of enclosing a product, comprising the steps of:
(i) wrapping the product in a film as claimed in any one of claims 1 to 7, such that the first layer is the outer layer; and
(ii) heat sealing the film around the product to form a sachet.

12. A method as claimed in claim 11, wherein the duration of step (ii) is less than 2 seconds, more preferably less than 1 second, more preferably less than 0.5 seconds, and wherein step (ii) is conducted at a temperature of less than 160°C, preferably less than 140°C, preferably less than 120°C.

13. Use of a film as claimed in any one of claims 1 to 7 to enclose a product and/or to prepare a sachet.

14. A sachet prepared by the method of any one of claims 11 and 12.

15. A method of releasing a product enclosed in a film as claimed in any one of claims 1 to 7, comprising the steps of:
(i) placing the enclosed product in water; and
(ii) allowing the film to disperse, thereby releasing the product.

## Patentansprüche

1. Film, umfassend:
eine erste Lage, die basierend auf dem Gewicht der ersten Lage umfasst:
mindestens 20 Gew.-% eines oder mehrerer einwertiger Salze der Alginsäure und mindestens 5 Gew.-% eines oder mehrerer organischer Weichmacher;
eine zweite Lage, die basierend auf dem Gewicht der zweiten Lage umfasst: ein oder mehrere Kohlenhydrate, die nicht Algininsäure und deren Salze sind, mindestens 5 Gew.-% eines oder mehrerer organischer Weichmacher, und weniger als 20 Gew.-% an Algininsäuresalzen;
wobei eine Oberfläche der zweiten Lage mit einer Oberfläche der ersten Lage verbunden ist.

2. Film nach Anspruch 1, wobei der Film eine Dicke zwischen 20 µm und 120 µm aufweist.

3. Film nach einem der Ansprüche 1 und 2, wobei die erste Lage weiterhin ein oder mehrere zweiwertige Alginsäuresalze umfasst, die aus Calciumalginat und Magnesiumalginat ausgewählt sind, und/oder wobei die zweite Lage eine Schmelzbeginn-Temperatur im Bereich von 55 °C bis 85 °C aufweist, bestimmt wie im Beispiel 3 der Beschreibung beschrieben, wobei die zweite Lage vorzugsweise eine Stärke und/oder Pullulan umfasst.

4. Film nach einem der Ansprüche 1 bis 3, wobei der Film, bezogen auf das Gesamtgewicht des Films, 3-90 Gew.-%, bevorzugt 15-85 Gew.-%, noch bevorzugter 25-80 Gew.-%, und am meisten bevorzugt 35-70 Gew.-% eines oder mehrerer Alginsäuresalze umfasst, bestimmt nach dem HPLC-Verfahren in Journal of Chromatographic Science 2013; 51: 208-214.

5. Film nach einem der Ansprüche 1 bis 4, wobei der Film eine Heißsiegelfestigkeit von mindestens 40 N/m, bevorzugt mindestens 60 N/m, noch bevorzugter mindestens 80 N/m, am meisten bevorzugt mindestens 100 N/m, am allermeisten bevorzugt mindestens 120 N/m aufweist, gemessen nach ASTM F88/ F88M-15 bei 55 % relativer Luftfeuchtigkeit und 20 °C, nachdem der Film mindestens eine Stunde lang bei 55 % relativer Luftfeuchtigkeit und 20 °C konditioniert und anschließend bei einer Temperatur von 120 °C und einem Druck zwischen 1 und 3 bar für eine Dauer von 1 Sekunde versiegelt wurde.

6. Film nach einem der Ansprüche 1 bis 5, wobei der organische Weichmacher in der ersten Lage ausgewählt ist aus Glycerin, Polyethylenglykol, Propylenglykol, Sorbit, Mannit, Xylit, Triethylcitrat, Ölsäure, Glucose, Mannose, Fructose, Saccharose, Harnstoff, Lecithin, Wachsen, Aminosäuren, Milchsäure, Zitronensäure, Glykolsäure, Apfelsäure, Weinsäure und Mischungen davon, wobei eine Mischung aus Glycerin, Sorbit und Ölsäure bevorzugt ist.

7. Film nach einem der Ansprüche 1 bis 6, wobei der organische Weichmacher in der zweiten Lage ausgewählt ist aus Glycerin, Polyethylenglykol, Sorbit, Mannit, Xylit, Triethylcitrat, Glucose, Mannose, Fructose, Saccharose, Harnstoff, Lecithin, Aminosäuren, Milchsäure, Zitronensäure, Glykolsäure, Apfelsäure, Weinsäure und Mischungen davon, wobei eine Mischung aus Glycerin und Sorbit bevorzugt ist.

8. Verfahren zur Herstellung eines Film nach einem der Ansprüche 1 bis 7, umfassend die folgenden Schritte:
(i) Bereitstellen einer ersten Lage, die basierend auf dem Gewicht der ersten Lage umfasst:
mindestens 20 Gew.-% eines oder mehrerer einwertiger Salze der Alginsäure, und
mindestens 5 Gew.-% eines oder mehrerer organischer Weichmacher;
(ii) Bereitstellen einer zweiten Lage, die basierend auf dem Gewicht der zweiten Lage Folgendes umfasst:
ein oder mehrere Kohlenhydrate, ausgenommen Alginsäure und deren Salze, mindestens 5 Gew.-% eines oder mehrerer organischer Weichmacher und weniger als 20 Gew.-% Alginsäuresalze; und
(iii) Verbinden einer Oberfläche der zweiten Lage mit einer Oberfläche der ersten Lage.

9. Produkt, das von einem Film nach einem der Ansprüche 1 bis 7 umhüllt ist.

10. Produkt nach Anspruch 9, wobei der Film nach 28-tägiger Prüfung gemäß ASTM D6691 zu mehr als 75 %, bevorzugt zu mehr als 80 %, noch bevorzugter zu mehr als 85 %, am meisten bevorzugt zu mehr als 90 %, und am allermeisten bevorzugt zu mehr als 95 % biologisch abbaubar ist.

11. Verfahren zum Umhüllen eines Produkts, umfassend die folgenden Schritte:
(i) Einwickeln des Produkts in einen Film nach einem der Ansprüche 1 bis 7 derart, dass die erste Lage die äußere Lage bildet; und
(ii) Versiegeln des Films um das Produkt herum, um einen Beutel zu bilden.

12. Verfahren nach Anspruch 11, wobei die Dauer von Schritt (ii) weniger als 2 Sekunden, vorzugsweise weniger als 1 Sekunde, noch bevorzugter weniger als 0,5 Sekunden beträgt, und wobei Schritt (ii) bei einer Temperatur von weniger als 160 °C, vorzugsweise weniger als 140 °C, noch bevorzugter weniger als 120 °C, durchgeführt wird.

13. Verwenden eines Films nach einem der Ansprüche 1 bis 7 zum Umhüllen eines Produkts und/oder zum Herstellen eines Beutels.

14. Beutel, der nach dem Verfahren eines der Ansprüche 11 und 12 hergestellt wurde.

15. Verfahren zum Freisetzen eines in einem Film nach einem der Ansprüche 1 bis 7 eingeschlossenen Produkts, umfassend die folgenden Schritte:
(i) Platzieren des eingeschlossenen Produkts in Wasser; und
(ii) Auflösen lassen des Films, wodurch das Produkt freigesetzt wird.

## Revendications

1. Film comprenant:
une première couche comprenant, sur la base du poids total de la première couche:
au moins 20 % en poids d'un ou plusieurs sel(s) monovalent(s) d'acide alginique, et
au moins 5 % en poids d'un ou plusieurs plastifiant(s) organique(s);
une deuxième couche comprenant, sur la base du poids total de la deuxième couche:
un ou plusieurs carbohydrate(s) autres que l'acide alginique et l'un quelconque de ses sels,
au moins 5 % en poids d'un ou plusieurs plastifiant(s) organique(s), et
moins de 20 % en poids de sels d'acide alginique;
dans lequel une surface de la deuxième couche est scellée par rapport à une surface de la première couche.

2. Film selon la revendication 1, dans lequel le film présente une épaisseur comprise entre 20 µm et 120 µm.

3. Film selon l'une quelconque des revendications 1 et 2, dans lequel la première couche comprend en outre un ou plusieurs sel(s) divalent(s) d'acide alginique choisi(s) parmi l'alginate de calcium et l'alginate de magnésium, et/ou dans lequel la deuxième couche présente une température de début de fusion dans la plage allant de 55°C à 85°C, déterminée comme décrit dans l'Exemple 3 de la spécification, de préférence dans lequel la deuxième couche comprend un amidon et/ou un pullulane.

4. Film selon l'une quelconque des revendications 1 à 3, dans lequel le film comprend, sur la base du poids total du film, 3-90 % en poids, de préférence 15-85 % en poids, de préférence encore 25-80 % en poids, plus préférablement 35-70 % en poids, d'un ou plusieurs sel(s) d'acide alginique déterminé(s) selon le procédé HPLC dans Journal of Chromatographie Science 2013; 51: 208-214.

5. Film selon l'une quelconque des revendications 1 à 4, dans lequel le film présente une résistance au thermoscellage d'au moins 40 N/m, de préférence d'au moins 60 N/m, de préférence encore d'au moins 80 N/m, de préférence encore d'au moins 100 N/m, plus préférablement d'au moins 120 N/m, tel que mesurée selon ASTM F88/F88M-15 à 55 % d'humidité relative et 20°C après que le film a été conditionné à 55 % d'humidité relative et à 20°C pendant au moins une heure, puis scellé à une température de 120°C et une pression comprise entre 1 et 3 bars appliquée pendant une durée de 1 seconde.

6. Film selon l'une quelconque des revendications 1 à 5, dans lequel le plastifiant organique dans la première couche est choisi parmi le glycérol, le polyéthylène glycol, le propylène glycol, le sorbitol, le mannitol, le xylitol, le citrate de triéthyle, l'acide oléique, le glucose, le mannose, le fructose, le sucrose, l'urée, la lécithine, les cires, les acides aminés, l'acide lactique, l'acide citrique, l'acide glycolique, l'acide malique, l'acide tartrique et leurs mélanges, un mélange de glycérol, de sorbitol et d'acide oléique étant préféré.

7. Film selon l'une quelconque des revendications 1 à 6, dans lequel le plastifiant organique dans la deuxième couche est choisi parmi le glycérol, le polyéthylène glycol, le sorbitol, le mannitol, le xylitol, le citrate de triéthyle, le glucose, le mannose, le fructose, le sucrose, l'urée, la lécithine, les acides aminés, l'acide lactique, l'acide citrique, l'acide glycolique, l'acide malique, l'acide tartrique et leurs mélanges, un mélange de glycérol et de sorbitol étant préféré.

8. Procédé de préparation d'un film selon l'une quelconque des revendications 1 à 7, comprenant les étapes consistant à:
(i) fournir une première couche comprenant, sur la base du poids total de la première couche:
au moins 20 % en poids d'un ou plusieurs sel(s) monovalent(s) d'acide alginique, et
au moins 5 % en poids d'un ou plusieurs plastifiant(s) organique(s);
(ii) fournir une deuxième couche comprenant, sur la base du poids total de la deuxième couche:
un ou plusieurs carbohydrate(s) autre(s) que l'acide alginique et l'un quelconque de ses sels,
au moins 5 % en poids d'un ou plusieurs plastifiant(s) organique(s), et
moins de 20 % en poids de sels d'acide alginique; et
(iii) sceller une surface de la deuxième couche par rapport à une surface de la première couche.

9. Produit emballé par un film selon l'une quelconque des revendications 1 à 7.

10. Produit selon la revendication 9, dans lequel le film est biodégradable à plus de 75 %, de préférence à plus de 80 %, de préférence encore à plus de 85 %, de préférence encore à plus de 90 %, plus préférablement à plus de 95 %, selon ASTM D6691 après 28 jours de test.

11. Procédé d'emballage d'un produit, comprenant les étapes consistant à:
(i) envelopper le produit dans un film selon l'une quelconque des revendications 1 à 7, de telle sorte que la première couche est la couche externe; et
(ii) thermosceller le film autour du produit pour former un sachet.

12. Procédé selon la revendication 11, dans lequel la durée de l'étape (ii) est inférieure à 2 secondes, de préférence encore inférieure à 1 seconde, de préférence encore inférieure à 0,5 seconde, et dans lequel l'étape (ii) est conduite à une température inférieure à 160°C, de préférence inférieure à 140°C, de préférence inférieure à 120°C.

13. Utilisation d'un film selon l'une quelconque des revendications 1 à 7 pour emballer un produit et/ou pour préparer un sachet.

14. Sachet préparé par le procédé selon l'une quelconque des revendications 11 et 12.

15. Procédé de libération d'un produit emballé dans un film selon l'une quelconque des revendications 1 à 7, comprenant les étapes consistant à:
(i) placer le produit emballé dans de l'eau; et
(ii) laisser le film se disperser, libérant ainsi le produit.
